(19) Europäisches Patentamt
European Patent Office
Office européen des brevets

(11) EP 1 137 681 B1

(12) # FASCICULE DE BREVET EUROPEEN

(45) Date de publication et mention de la délivrance du brevet:
**12.01.2005 Bulletin 2005/02**

(21) Numéro de dépôt: **00967957.2**

(22) Date de dépôt: **05.10.2000**

(51) Int Cl.⁷: **C08F 228/02**, G02B 1/04

(86) Numéro de dépôt international:
**PCT/FR2000/002771**

(87) Numéro de publication internationale:
**WO 2001/025302 (12.04.2001 Gazette 2001/15)**

(54) **COMPOSITIONS POLYMERISABLES POUR LA FABRICATION DE SUBSTRATS POLYMERES TRANSPARENTS, SUBSTRATS POLYMERES TRANSPARENTS OBTENUS ET LEURS APPLICATIONS DANS L'OPTIQUE**

POLYMERISIERBARE ZUSAMMENSETZUNG FÜR DIE HERSTELLUNG VON TRANSPARENTEN POLYMERBESCHICHTUNGEN, SO HERGESTELLTE TRANSPARENTE POLYMERBESCHICHTUNGEN UND DEREN OPTISCHE VERWENDUNG

POLYMERISABLE COMPOSITIONS FOR MAKING TRANSPARENT POLYMER SUBSTRATES, RESULTING POLYMER SUBSTRATES AND THEIR USES IN OPTICS

(84) Etats contractants désignés:
**AT BE CH CY DE DK ES FI FR GB GR IE IT LI LU MC NL PT SE**

(30) Priorité: **06.10.1999 FR 9912459**

(43) Date de publication de la demande:
**04.10.2001 Bulletin 2001/40**

(73) Titulaire: **ESSILOR INTERNATIONAL (Compagnie Générale d'Optique)**
**F-94220 Charenton-le-Pont (FR)**

(72) Inventeurs:
- **PRIMEL, Odile**
**F-94300 Vincennes (FR)**
- **PILLIE, Maxime**
**F-75003 Paris (FR)**
- **RICHARD, Gilles**
**F-77860 Quincy Voisins (FR)**
- **YEAN, Leanirith**
**F-91160 Longjumeau (FR)**

(74) Mandataire: **Catherine, Alain**
**Cabinet Harlé & Phélip**
**7, rue de Madrid**
**75008 Paris (FR)**

(56) Documents cités:
**EP-A- 0 745 621**
**WO-A-96/26184**
**WO-A-96/38486**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention se rapporte au domaine des compositions de monomères polymérisables qui, après polymérisation, fournissent des substrats polymères transparents et à leur utilisation pour la fabrication de lentilles optiques, en particulier ophtalmiques.

Il a déjà été décrit des compositions polymérisables pour la fabrication de lentilles ophtalmiques à haut indice de réfraction.

Le brevet EP-A-453149 décrit des compositions renfermant un monomère di(méth)acrylate de polyoxyalkylèneglycol; un monomère contenant un motif bisphénol-A et conduisant, par homopolymérisation, à un polymère d'indice de réfraction supérieur à 1,55 et un monomère uréthanne ayant de 2 à 6 groupes terminaux (méth)acryliques.

La polymérisation est préférentiellement mixte UV/thermique.

La demande de brevet EP-745621 décrit une composition photopolymérisable comprenant :

a) 10 à 70 % de bis-2-[(méth)acryloylthioéthyl]sulfure ou d'un mélange de celui-ci avec le bis[(méth)acryloylthiophényl]sulfure;
b) 10 à 60 % en poids d'au moins un monomère de type poly(éthoxy)bisphénol-A di(méth)acrylate;
c) 5 à 30 % en poids d'au moins un monomère mono(méth)acrylate aromatique ou polycyclanique;
d) 0 à 15 % en poids d'un polyalkylèneglycol di(méth)acrylate;
e) 0 à 10 % en poids d'un polythiol.

Le document de brevet WO 96/38486 décrit des compositions polymérisables pour la fabrication de lentilles optiques à haut indice et haut nombre d'Abbe, comprenant 20 à 60 % en poids d'un monomère acrylate ou méthacrylate dérivé d'une oléfine polycyclique, en particulier un dérivé acrylate ou méthacrylate du tricyclodécane, 15 à 60 % en poids d'un di- ou polythiol, 5 à 50 % en poids d'un monomère divinylique ou polyvinylique, et 0 à 20 % en poids d'un comonomère polymérisable qui peut être choisi parmi les méthacrylates, acrylates, thiométhacrylates, thioacrylates, vinyles, vinyléthers, allyles, époxydes et analogues.

Les articles optiques formés à partir de ces compositions ont des indices de réfraction élevés allant jusqu'à 1,6 ou plus et des nombres d'Abbe de 38 ou plus.

Bien qu'il soit indiqué, que les compositions polymérisables de ce document peuvent être polymérisées thermiquement et/ou par irradiation UV, tous les exemples de réalisation font état d'un durcissement thermique dont la durée est particulièrement longue (8 heures).

Le document de brevet WO 97/44372 décrit une composition polymérisable pour la fabrication de lentilles ophtalmiques, qui comprend 2,5 à 100 % d'un monomère cyclique d'ester de divinyle, 5 à 30 % en poids d'un monomère di- ou polythiol et, éventuellement, 1 à 40 % en poids d'un monomère thiodiacrylate ou diméthacrylate.

Comme on le voit donc, de nombreuses compositions polymérisables conduisant à des matériaux d'indice de réfraction de 1,6 ou plus ont été proposées dans l'art antérieur, sans toutefois donner totale satisfaction pour l'obtention de substrats polymères transparents, utilisables dans le domaine optique.

Un premier objet de la présente invention est donc de fournir de nouvelles compositions de monomères polymérisables conduisant à des substrats polymères transparents.

En particulier, les substrats optiques doivent posséder l'ensemble des caractéristiques suivantes :

- une transparence élevée (transmission généralement supérieure à 85 %, et de préférence supérieure ou égale à 90 %), avec une absence ou éventuellement une très faible diffusion de la lumière,
- une faible densité inférieure à 1,4, de préférence inférieure à 1,3 et mieux encore inférieure à 1,2,
- un indice de réfraction allant de 1,55 à 1,60,
- un nombre d'Abbe élevé, allant de 35 à 45, afin d'éviter des aberrations chromatiques,
- une absence de couleur après polymérisation, en particulier un faible indice de jaune et une absence de jaunissement au cours du temps,
- une bonne résistance aux chocs (en particulier le verre non revêtu doit, de préférence, passer avec succès le test FDA de chute de billes),
- une bonne résistance à l'action des contraintes statiques,
- une bonne résistance à l'abrasion,
- une bonne aptitude aux traitements divers (dépôt de revêtements durs, anti-reflets, primaires d'adhérence et/ou anti-chocs,...), et en particulier une bonne aptitude à la coloration,
- une bonne aptitude aux traitements de surfaçage et de débordage, sans que la géométrie globale du verre soit altérée au cours de ces opérations,
- un faible taux d'absorption d'eau.

Un second objet de l'invention est de fournir des compositions qui puissent être aisément et rapidement polymérisées, en particulier qu'elles puissent être polymérisées par des techniques de photopolymérisation ou des techniques mixtes de photopolymérisation et de polymérisation thermique permettant de réduire les temps de cycle de fabrication des lentilles.

La composition de monomères polymérisables selon l'invention comprend:

(a) au moins 40 parties en poids, de préférence au moins 50 et mieux encore au moins 55 parties en poids d'au moins un monomère thio(méth)acrylate;
(b) au moins un monomère à haut nombre d'Abbe;
(c) au plus 20 parties en poids d'un monomère polyvinylique aromatique; et
(d) au moins un polythiol;

pour 100 parties en poids de (a), (b), (c) et (d).

De préférence, le ou les monomères à haut nombre d'Abbe représentent 10 à 40 parties en poids, préférentiellement 10 à 30, et le polythiol 5 à 20 parties en poids pour 100 parties en poids du mélange des monomères (a), (b), (c) et (d).

Le monomère polyvinylique aromatique représente généralement 0,5 à 10 parties en poids, préférentiellement 1 à 5 parties en poids pour 100 parties en poids de (a), (b), (c) et (d).

De préférence, le polythiol représente au plus 20 parties en poids et mieux au plus 15 parties en poids pour 100 parties en poids de (a), (b), (c) et (d).

En outre, les compositions polymérisables peuvent comprendre, pour 100 parties du mélange de monomères de (a), (b), (c) et (d), jusqu'à 30 parties en poids d'au moins un autre monomère copolymérisable, différent des monomères de (a), (b), (c) et (d). Préférentiellement, l'autre comonomère polymérisable représente pas plus de 20 parties en poids et mieux pas plus de 10 parties en poids pour 100 parties du mélange de monomères de (a), (b), (c) et (d). De préférence, cet autre monomère copolymérisable est un monomère copolymérisable par voie radicalaire.

Un des intérêts des compositions selon l'invention réside dans le fait que ces compositions peuvent être aisément et rapidement photopolymérisées.

Le monomère ou mélange de monomères du constituant (a) de la composition selon l'invention, englobe tout monomère comportant au moins une fonction thioacrylate ou thiométhacrylate.

Dans la présente description et les revendications, on entend par fonction thio(méth)acrylate un groupe fonctionnel de formule:

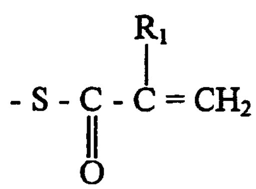 ,

dans lequel $R_1$ représente H ou $-CH_3$ .

De préférence, les monomères du constituant (a) répondent à la formule:

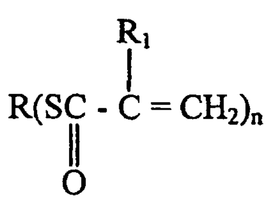

(I)

dans laquelle :

R représente un radical hydrocarboné aliphatique, linéaire ou ramifié, monovalent ou polyvalent, ou un groupement aromatique monovalent ou polyvalent directement lié à l'atome de soufre du ou des groupements thio(méth)acrylates par un noyau aromatique ou par l'intermédiaire d'une chaîne alkyle linéaire, le radical R pouvant comporter dans sa chaîne un ou plusieurs groupes choisis parmi -O-, -S-,

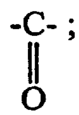

$R_1$ représente l'hydrogène ou $-CH_3$; et
n est un entier de 1 à 6, de préférence de 1 à 3.

Parmi les radicaux R monovalents, on peut citer les radicaux alkyle, linéaires ou ramifiés, de $C_1$ à $C_5$ , les radicaux de formule :

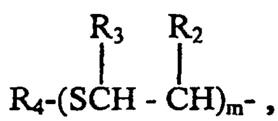

dans laquelle :

$R_2$ et $R_3$ sont, indépendamment l'un de l'autre, H ou un radical alkyle, linéaire ou ramifié en $C_1$-$C_5$ ;
$R_4$ est un radical alkyle, linéaire ou ramifié en $C_1$-$C_5$ , un radical aralkyle en $C_7$-$C_{10}$ ou un radical aryle en $C_6$-$C_{12}$ , éventuellement substitué, en particulier par des groupes alkyle et/ou halogène; et
m est un entier de 1 à 4.

Parmi les radicaux R monovalents préférés, on peut citer

$C_2H_5SCH_2CH_2$- ;

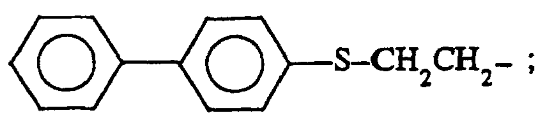

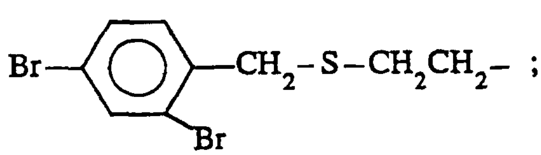

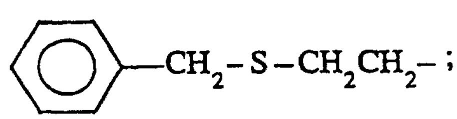

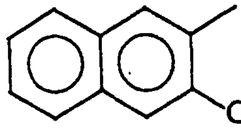

.

Des monomères de formule (I) pour lesquels n = 1 et tels que définis ci-dessus, sont décrits, entre autres, dans les brevets US-A-4606864, JP-63316766 et EP-A-0384725.

Parmi les radicaux R divalents entrant dans le cadre des monomères de formule (I), on peut citer les radicaux alkylène, linéaires ou ramifiés, en $C_2$ à $C_{10}$ pouvant comporter dans leur chaîne un ou plusieurs groupes -O-, -S- ou

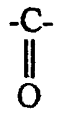,

les radicaux alkylidène de formule

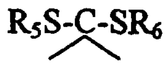,

dans laquelle $R_5$ et $R_6$ sont des radicaux alkyle en $C_1$-$C_5$, les radicaux de formule :

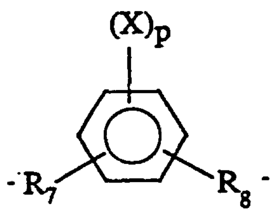

dans laquelle $R_7$ et $R_8$ sont des groupes alkylène, linéaires ou ramifiés, en $C_1$-$C_5$ pouvant comporter un ou plusieurs groupes -O-, -S- ou

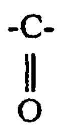

dans leurs chaînes et X est choisi parmi les radicaux alkyle en $C_1$-$C_5$ et les halogènes, et p est un entier de 0 à 4, et les radicaux de formule :

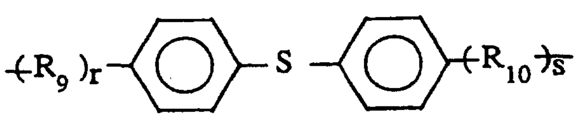

dans laquelle $R_9$ et $R_{10}$ sont des radicaux alkyle, linéaires ou ramifiés en $C_1$ à $C_5$, pouvant comporter dans leur chaîne un ou plusieurs groupes -O-, -S- , ou

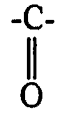

et r et s sont égaux à 0 ou 1.

Parmi les radicaux R divalents préférés, on peut citer les radicaux :

- $-(CH_2)_x-$ où x est un entier de 2 à 8,
- les radicaux $-(CH_2CH_2O)_yCH_2CH_2-$ où y est un entier de 1 à 4,
- les radicaux $-(CH_2CH_2S)_zCH_2CH_2-$ où z est un entier de 1 à 4,
- les radicaux $-(CH_2)_{u'}(S(CH_2)_{v'})_{x'}S-(CH_2)_{w'}$ où x'est égal à 0 ou 1, et u', v', w' sont des entiers de 2 à 6,
- les radicaux de formule :

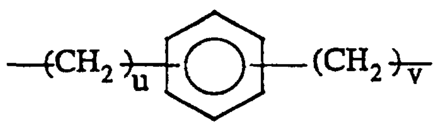 ,

où u et v sont des entiers de 1 à 4,

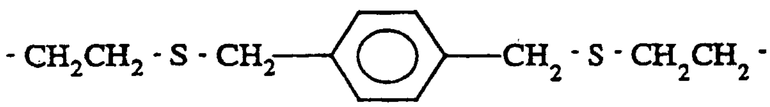 ,

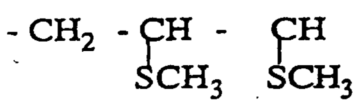 , et 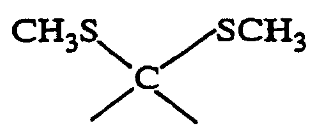 .

Les radicaux R divalents particulièrement préférés sont :

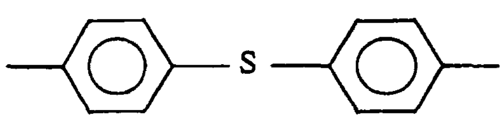 et $-H_4C_2-S-C_2H_4-$

Des monomères de formule (I) divalents sont décrits, entre autres, dans les brevets EP-A-273661, EP-A-273710, EP-A-384725.

Parmi les radicaux R trivalents des monomères de formule (I), on peut citer les radicaux alkyltriyle en $C_3$ à $C_{10}$ pouvant comporter dans leur chaîne, un ou plusieurs groupes -O-, -S- ou

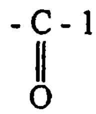

les radicaux alkylaryle trivalents dont les chaînes alkyle peuvent comporter un ou plusieurs groupes -S- ou -O-, et les groupes aryle trivalents.

Parmi les radicaux R trivalents ou de valence supérieure, on peut citer :

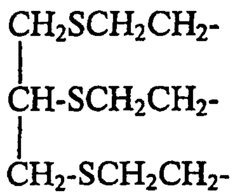 , 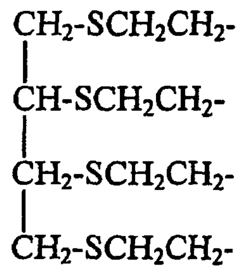

Parmi les monomères de formule (I) recommandés dans la présente invention, on peut citer :

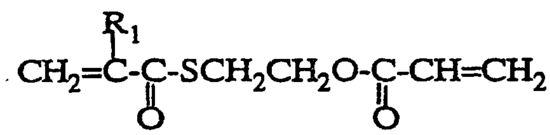

S-2-acryloyloxyéthylthio(méth)acrylate,

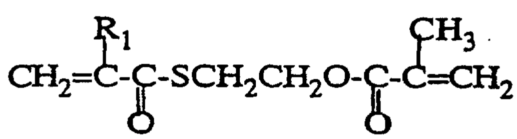

S-2-méthacryloyloxyéthylthio(méth)acrylate,

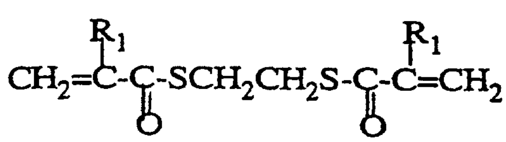

1,2-bis[(méth)acryloylthio]éthane,

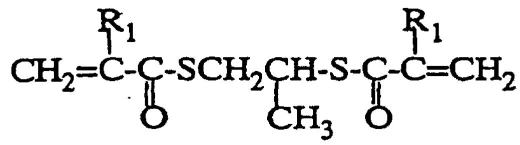

1,2-bis[(méth)acryloylthio]propane,

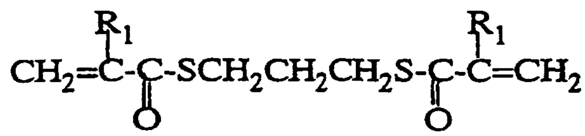

1,3-bis[(méth)acryloylthio]propane,

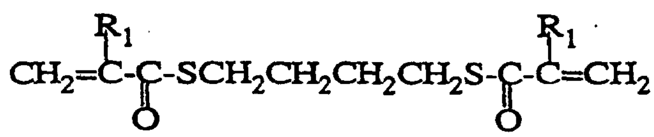

1,4-bis[(méth)acryloylthio]butane,

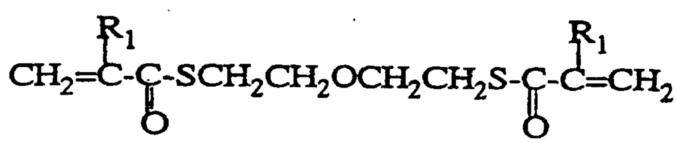

bis-2-[(méth)acryloylthioéthyl]éther,

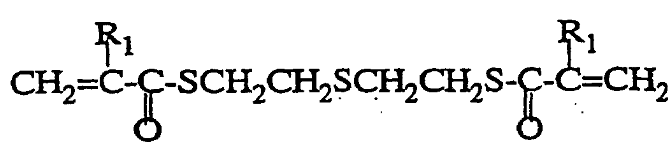

bis-2-[(méth)acryloylthioéthyl]sulfure,

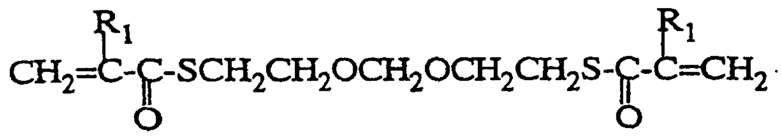

bis-2-[(méth)acryloylthioéthoxy]méthane,

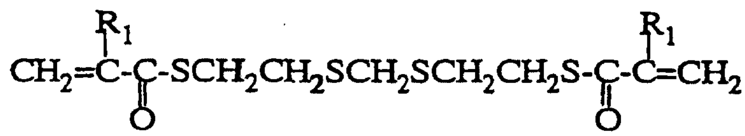

bis-2-[(méth)acryloylthioéthylthio]méthane,

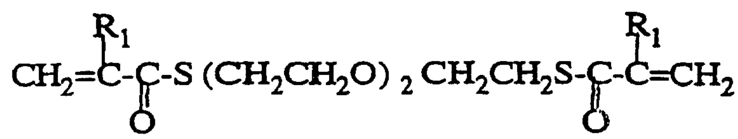

1,2-bis-[2-(méth)acryloylthioéthoxy]éthane,

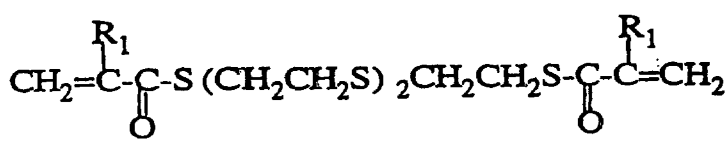

1,2-bis-[2-(méth)acryloylthioéthylthio]éthane,

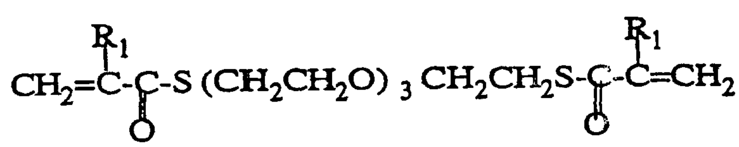

bis-[2-(2-(méth)acryloylthioéthoxy)éthyl]éther,

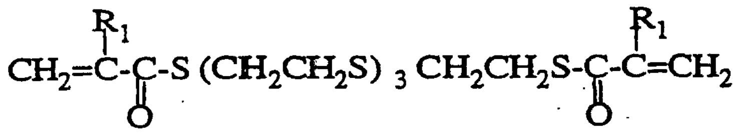

bis-[2-(2-(méth)acryloylthioéthylthio)éthyl]sulfure,

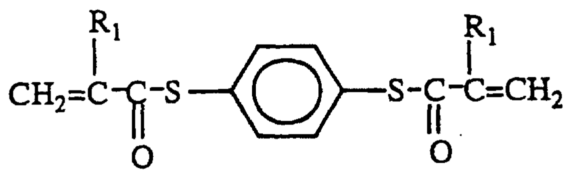

1,4-bis[(méth)acryloylthio]benzène,

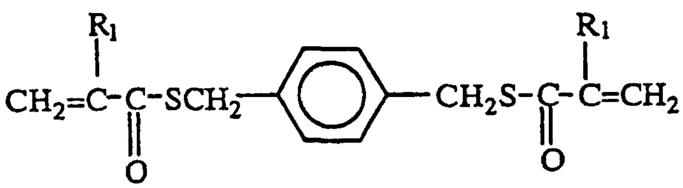

1,4-bis[(méth)acryloylthiométhyl]benzène,

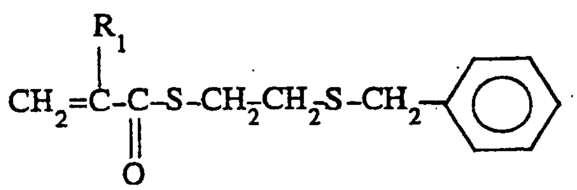

Benzylthioéthylthio(méth)acrylate,

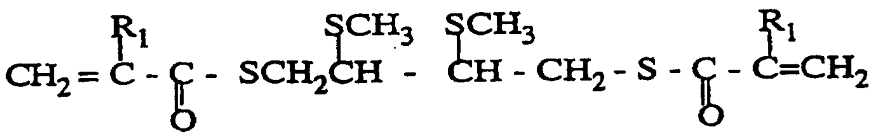

1,4-[bis(méth)acryloylthio]-2,3-diméthylthiobutane,

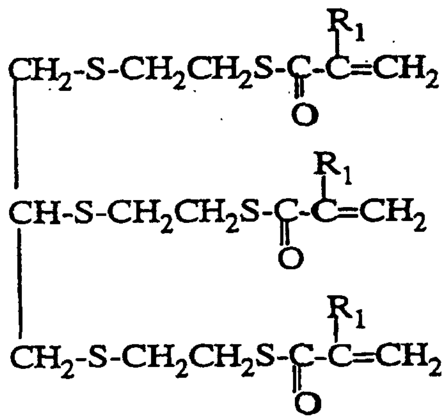

1,2,3-tris[(méth)acryloylthioéthyl]thiolpropane, et

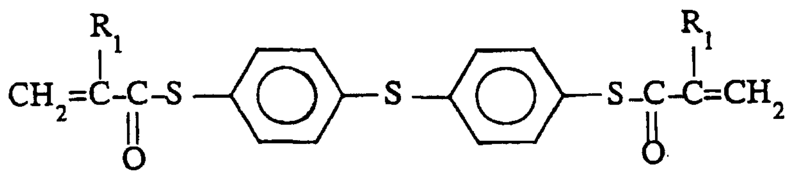

bis[(méth)acryloylthiophényl]sulfure,

où $R_1$ représente un atome d'hydrogène ou un groupe méthyle.

De préférence, le ou les monomères thio(méth)acrylate sont choisis parmi les monomères thio(méth)acrylate non aromatiques.

Une classe préférée de monomères thio(méth)acrylate comprend les monomères de formule :

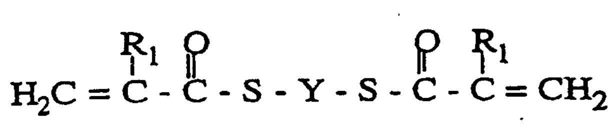

(II)

dans laquelle Y représente un groupe alkylène linéaire ou ramifié en $C_2$-$C_{12}$, un groupe cycloalkylène en $C_3$-$C_{12}$, un groupe arylène en $C_6$-$C_{14}$ ou un groupe alkarylène en $C_7$-$C_{26}$, les chaînes carbonées de Y pouvant être interrompues par un ou plusieurs atomes d'oxygène et/ou de soufre, et $R_1$ est l'hydrogène ou un groupe méthyle;

les monomères de formule :

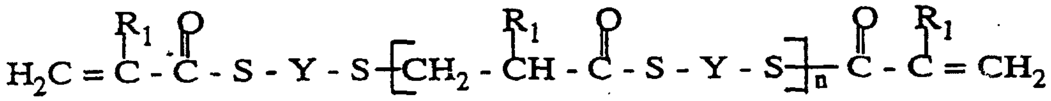 (III)

dans laquelle $R_1$ et Y sont définis comme précédemment, et n est un entier de 1 à 10, de préférence de 1 à 6, et leurs mélanges.

Un monomère de formule (II) particulièrement préféré répond à la formule :

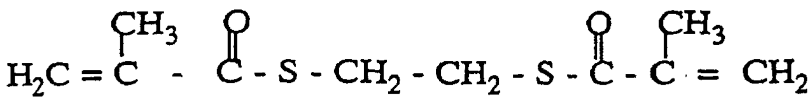 (IV)

Un monomère de formule (III) particulièrement préféré répond à la formule :

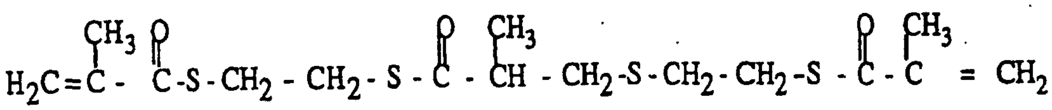 (V)

Dans une réalisation préférée de l'invention, le constituant (a) comprend un mélange de monomères de formules (IV) et (V) et éventuellement d'un monomère monofonctionnel de formule :

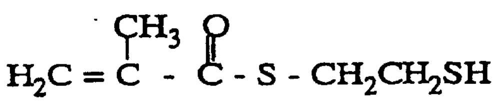 (VI)

Dans le mélange préféré, le monomère, de formule (IV) représente 10 à 50% en poids, le monomère de formule (V) 30 à 60 % en poids et le monomère de formule (VI), 0 à 20 % en poids par rapport au poids total du mélange.

Les monomères de formules (II) et (III) sont décrits dans le brevet US 5,384,379.

Le second constituant essentiel des compositions de monomères polymérisables selon l'invention est constitué par au moins un monomère à haut nombre d'Abbe.

Par monomère à haut nombre d'Abbe, il faut comprendre un monomère susceptible d'engendrer, par homopolymérisation, un polymère transparent à haut nombre d'Abbe, c'est-à-dire d'au moins 45, et préférentiellement au moins 50.

De préférence, le monomère à haut nombre d'Abbe comprend au moins un radical cyclique ou polycyclique hydrocarboné non aromatique.

Le monomère à haut nombre d'Abbe est choisi préférentiellement parmi l'un au moins des monomères de formule suivante :

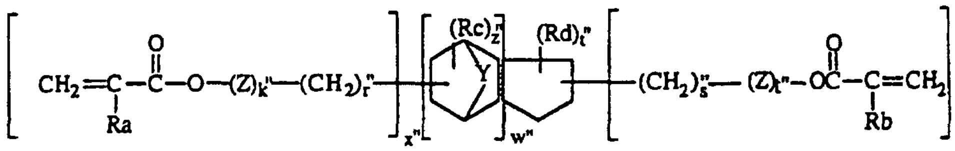 (A1)

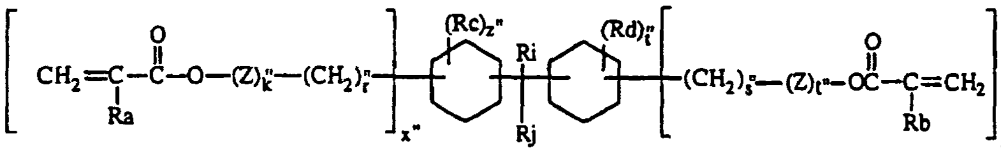 (B1)

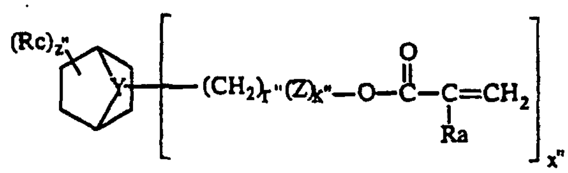 (C1)

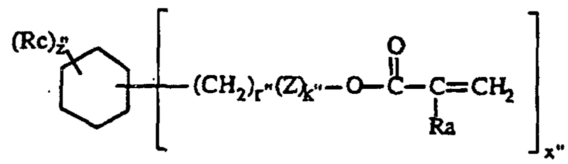 (D1)

Formules dans lesquelles :

Y est un radical divalent choisi parmi -O- , $-CH_2-$ , $-C(CH_3)_2-$ , $-C(H)(CH_3)-$ ,
Z est un radical divalent choisi parmi - $(CH_2)p$ -O , p étant un entier de 1 à 4, et

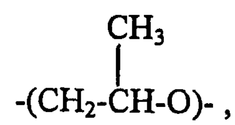

$R_a$, $R_b$ représentent H ou $CH_3$,
$R_c$, $R_d$ représentent, indépendamment l'un de l'autre, un radical alkyle linéaire ou ramifié de 1 à 6 atomes de carbone,
$R_i$, $R_j$ représentent, indépendamment l'un de l'autre, un radical alkyle linéaire ou ramifié de 1 à 10 atomes de carbone,
w" est un entier de 1 à 3 ,
x" est un entier de 0 à 3 ,
y" est un entier de 0 à 3 ,
à la condition que x" + y" ≥ 1 ,
k" est un entier de 0 à 6 ,
l" est un entier de 0 à 6 ,
r" est un entier de 0 à 6 ,
s" est un entier de 0 à 6 ,
z" est un entier de 0 à 3 , et

t'' est un entier de 0 à 3.

Les monomères à haut nombre d'Abbe particulièrement préférés sont choisis parmi les monomères de formule

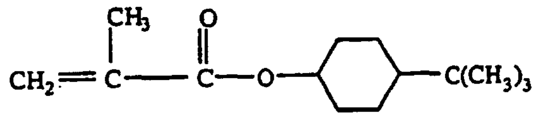

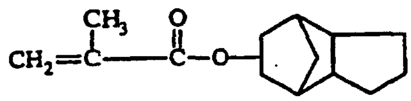

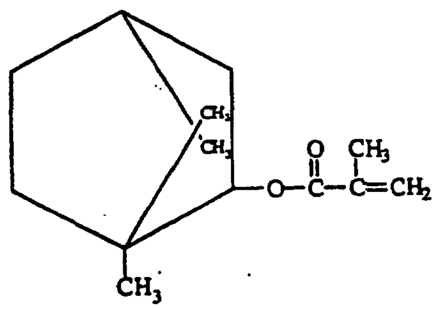

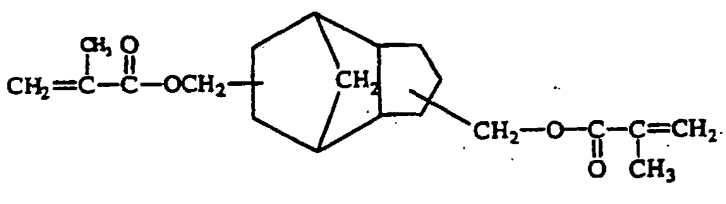

De manière générale, les monomères à haut nombre d'Abbe préférés sont des monomères difonctionnels di (méth)acrylates.

Le constituant (c) est un monomère polyvinylique aromatique ou un mélange de monomères polyvinyliques aromatiques.

Dans la présente demande, le terme "vinylique" s'entend au sens strict et n'englobe pas de fonctions du type acrylique ou méthacrylique.

Le monomère polyvinylique aromatique peut être un monomère de formule

$$[(CH_2 = CH)\text{-}(A)_{a'}\text{-}]_{b'}\text{-}B$$

dans laquelle B est choisi parmi :

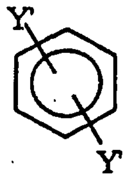,

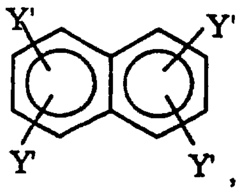,

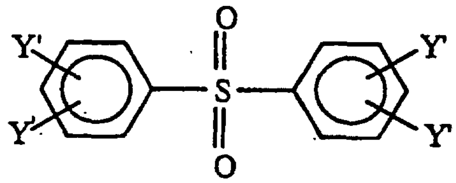,

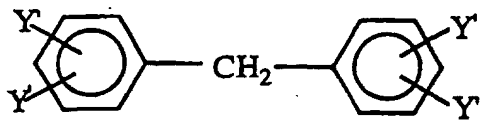,

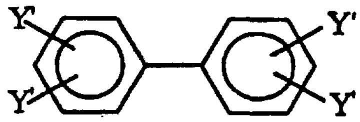,

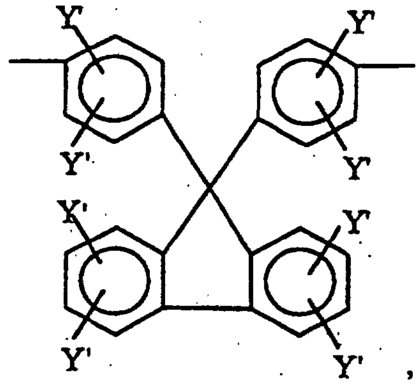,

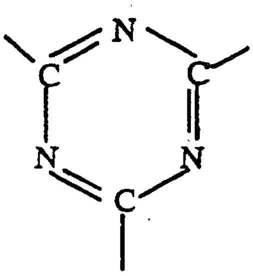,

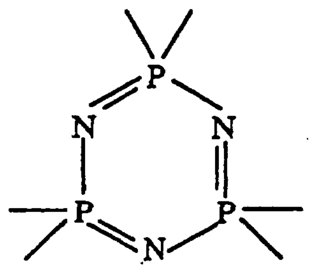,

A est une chaîne divalente choisie parmi :

$$-CH_2- , -(CH_2)_{c'}-O- , -CH_2-\overset{CH_3}{\overset{|}{C}}-O- \text{ ou } -(CH_2-CH_2-S)- ,$$

Y' est un atome d'hydrogène ou un halogène,

a' = 0,1 ou 2,
b' est un entier de 2 à 6, et
c' est un entier de 1 à 4.

Les monomères polyvinyliques aromatiques préférés sont le divinylbenzène, le divinylnaphtalène et leurs dérivés, et en particulier le divînylbenzène.

Les monomères polythiols du constituant (d) des compositions selon la présente invention, sont bien connus dans la technique et peuvent être représentés par la formule $R'(SH)_{n'}$, dans laquelle n' est un entier de 2 ou plus, de préférence de 2 à 5, et R'est un radical aliphatique, aromatique ou hétérocyclique.

De préférence, le composé polythiol est un composé dithiol, trithiol ou tétrathiol, en particulier un polythiol à nombre d'Abbe élevé.

Ces composés polythiols sont bien connus dans la technique et sont décrits entre autre dans le document EP 394 495.

Parmi les dithiols utiles dans la présente invention, on peut citer le 9,10-anthracènediméthanethiol, le 1,11-undécanedithiol, le 4-éthylbenzène-1,3-dithiol, le 1,2-éthanedithiol, le 1,8-octanedithiol, le 1,18-octadécanedithiol, le 2,5-dichlorobenzène-1,3-dithiol, le 1,3-(4chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3-diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercapto-octanoïque, le 2,5-dimercapto-1,3,4-thiadiazole, le 2,2'-dimercaptobiphényle, le 4,4'-dimercaptobiphényle, le 4,4'-dimercaptobibenzyle, le 3,4dimercaptobutanol, le 3,4-dimercaptobutylacétate, le 2,3-dimèrcapto-1-propanol, le 1,2-dimercapto-1,3-butanediol, l'acide 2,3-dimercaptopropionique, le 1,2-dimercaptopropylméthyléther, le 2,3-dimercaptopropyl-2',3'-diméthoxypropyléther, le 3,4-thiophènedithiol, le 1,10-décanedithiol, le 1,12-dodécanedithiol, le 3,5,5-triméthylhexane-1,1-dithiol, le 2,5-toluènedithiol, le 3,4-toluènedithiol, le 1,4naphtalènedithiol, le 1,5-naphtalènedithiol, le 2,6-naphtalènedithiol, le 1,9-nonanedithiol, le norbornène-2,3-dithiol, le bis(2-mercaptoisopropyl)éther, le bis(11-mercaptoundécyl)sulfure, le bis(2-mercaptoéthyl)éther, le bis(2-mercaptoéthyl)sulfure, le bis(18-mercapto-octadécyl)sulfure, le bis(8-mercaptooctyl)sulfure, le bis(12-mercaptodécyl)sulfure, le bis(9-mercaptononyl)sulfure, le bis(4-mercaptobutyl)sulfure, le bis (3-mercaptopropyl)éther, le bis(3-mercaptopropyl)sulfure, le bis(6-mercaptohexyl)sulfure, le bis(7-mercaptoheptyl)sulfure, le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiôl, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane- 1, 1 -dithiol, le 2-méthylbutane-2,3-dithiol, l'éthylèneglycol dithioglycolate, l'éthylèneglycol bis(3-mercaptopropionate). Parmi les trithiols, on peut citer le 1,2,3-propanetrithiol, le 1,2,4-butanetrithiol, le triméthylolpropanetrithiol glycolate, le triméthylolpropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans les compositions de la présente invention, le néopentane tétrathiol, le 2,2'-bis(mercaptométhyl)-1,3-propanedithiol, le pentaérythritol tétrakis(3mercaptopropionate), le pentaérythritol tétrakis (thioglycolate), le 1,3,5-benzènetrithiol, le 2,4,6-toluènetrithiol, le 2,4,6-méthylènetrithiol, et les polythiols correspondant aux formules :

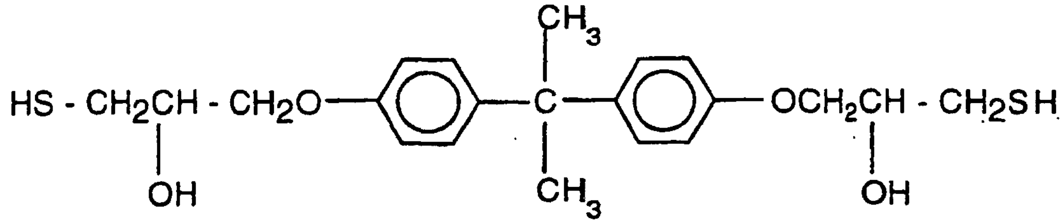

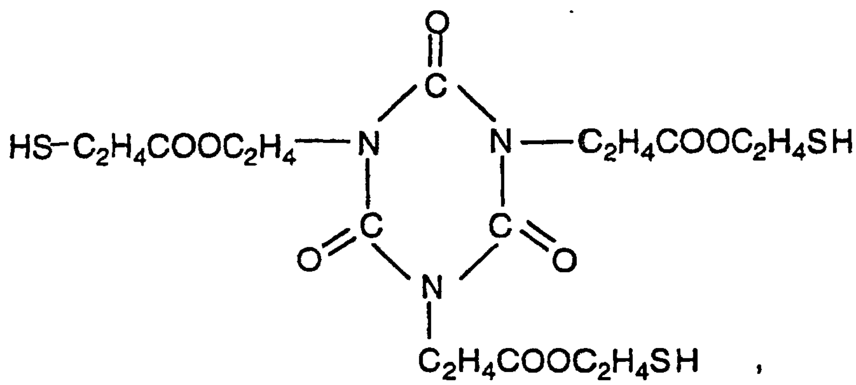

$(HS\ CH_2CH_2\ COO\ CH_2)_3\ C\ C_2H_5$ (TTMP), et
le 4-mercaptométhyl-3,6-dithia-1,8-octanedithiol.

Les polythiols préférés selon la présente invention sont l'éthylèneglycol bis(thioglycolate), le triméthylolpropane tris(3-mercaptopropionate), le pentaérythritol tétrakis thiopropionate (PETP), le 4-mercaptométhyl-3,6-dithia-1,8-octanedithiol (MDO), le bis(2mercaptoéthyl)sulfure (DMDS) et le pentaérythritol tétrakis thioglycolate (PETG).

Comme indiqué précédemment, outre les monomères des constituants (a), (b), (c) et (d), les compositions selon l'invention peuvent comprendre d'autres monomères copolymérisables, en particulier des monomères copolymérisables par voie radicalaire.

Ces monomères permettent d'ajuster les propriétés des substrats transparents obtenus.

Ces monomères peuvent être présents dans les compositions de l'invention dans une proportion de 0 à 30 % par rapport au poids total des monomères des constituants (a), (b), (c) et (d), de préférence 0 à 20 % et mieux encore 0 à 10%.

Parmi ces monomères, on peut citer :

les alkyl (méth)acrylates tels que le méthyl (méth)acrylate et l'éthyl (méth)acrylate, les cycloalkyl (méth)acrylates tels que le cyclohexyl (méth)acrylate et le dicyclopentyl (méth)acrylate, le phényl (méth)acrylate, le benzyl (méth) acrylate, les naphtyl (méth)acrylates, les phénoxyalkyl (méth)acrylates tels que le phénoxyéthyl (méth)acrylate et le phénoxybutyl (méth)acrylate, les alkylèneglycol di(méth)acrylates tels que l'éthylèneglycol di(méth)acrylate et le propylèneglycol di(méth)acrylate, les polyalkylèneglycol di(méth)acrylates tels que les polyéthylèneglycol di (méth)acrylates et les polybutylèneglycol di(méth)acrylates, le néopentylglycol di(méth)acrylate et les dérivés de bisphénol-A di(méth)acrylates, les uréthanes polyméthacrylates

Parmi les composés de bisphénol-A di(méth)acrylates, on peut citer les composés de formule :

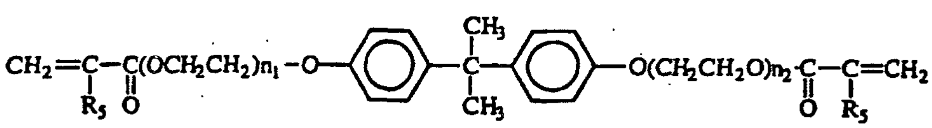

dans lesquelles $R_5$ représente H ou $CH_3$ et $n_1 + n_2$ a une valeur moyenne de 0 à 40.

Des composés préférés répondant à la formule ci-dessus sont ceux pour lesquels $R_5 = CH_3$ et $\overline{n_1 + n_2} = 2,6$ (EBADMA), $\overline{n_1 + n_2} = 4$ (DBADMA), $\overline{n_1 + n_2} = 10$ (OBADMA) et $\overline{n_1 + n_2} = 30$.

Les compositions polymérisables selon l'invention peuvent également comporter des additifs classiquement utilisés dans les compositions polymérisables pour le moulage d'articles optiques, en particulier des verres de lunette, dans des proportions classiques, à savoir des inhibiteurs, des colorants, des absorbeurs UV, des parfums, des déodorants, des antioxydants et des additifs anti-jaunissement.

En particulier, on peut utiliser des agents anti-jaunes tels que ceux décrits dans les brevets US 5442022, US 5545828, US 5702825 etUS 5741831.

L'agent anti-jaune préféré est le 3-méthyl 2-butène 1-ol (MBOL).

Comme exemples préférentiels d'agents antioxydants, on peut citer la triphénylphosphine (TPP) et l'Irganox®

1010 pentaérythritol tétrakis[3(3,5-di-tert.-butyl-4-hydroxyphényl)propionate] (CG 1010).

Les parfums permettent de masquer l'odeur des compositions, en particulier lors des opérations de surfaçage.

Les compositions selon l'invention comprennent généralement des amorceurs de polymérisation, de préférence des photoamorceurs ou des mélanges de photoamorceurs et d'amorceurs thermiques, en proportion de 0,001 à 5 % en poids par rapport au poids total des monomères polymérisables contenus dans la composition.

Parmi les photoamorceurs utilisables dans les compositions polymérisables selon l'invention, on peut citer en particulier l'oxyde de 2,4,6-triméthylbenzoyldiphénylphosphine (TPO), la 1-hydroxycyclohexylphénylcétone, la 2,2-diméthoxy-1,2-diphényléthane-1-one, les alkylbenzoyléthers, le photoamorceur commercialisé par la Société CIBA-GEIGY sous la dénomination CGI 1700, qui est un mélange 25/75 d'un composé de formule :

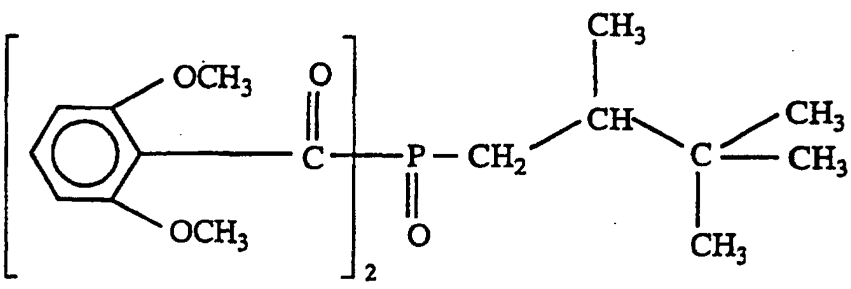

(A)

et d'un composé de formule :

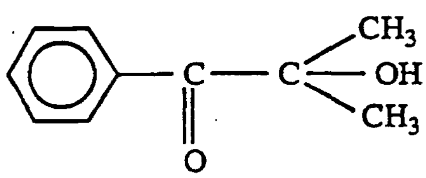

(B)

et le photoamorceur CGI 1850 commercialisé par la Société CIBA GEIGY, qui est un mélange (50150) (en poids) de composé A et d'Irgacure® 184 de formule:

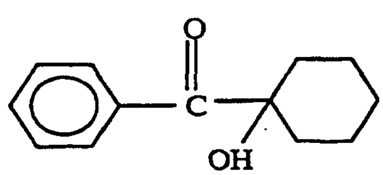

Un autre photoamorceur préféré est le CGI 819 de la Société CIBA-GEIGY, de formule:

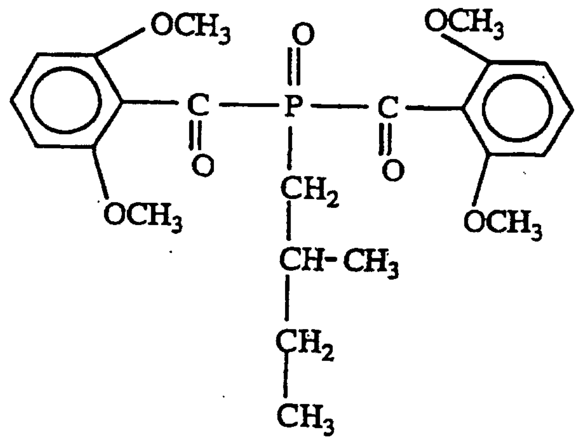

D'autres photoamorceurs du même type peuvent être aussi utilisés, tels que celui de formule :

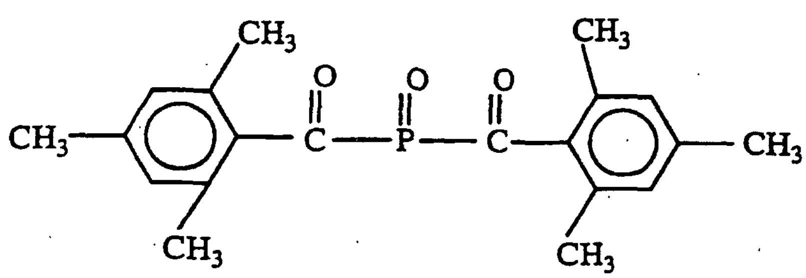

Comme indiqué précédemment, les compositions polymérisables préférées selon l'invention sont des compositions photopolymérisables comportant un ou plusieurs photoamorceurs.

De préférence encore, les compositions polymérisables selon l'invention sont des compositions photo- et thermopolymérisables comprenant à la fois un photoamorceur de polymérisation et un amorceur thermique de polymérisation.

Les amorceurs de polymérisation thermique sont des composés bien connus dans la technique et on peut citer parmi ceux-ci les peroxydes tels que le peroxyde de benzoyle, le peroxydicarbonate de cyclohexyle, le peroxydicarbonate d'isopropyle et le t.-butylperoxy(2-éthylhexanoate).

La présente invention va maintenant être décrite de façon plus détaillée dans les exemples qui suivent. Dans ces exemples, sauf indication contraire, tous les pourcentages et parties sont exprimés en poids.

Exemples 1 à 6

1) Préparation des compositions polymérisables

On a formulé six compositions de monomères polymérisables selon l'invention en mélangeant les monomères indiqués dans le tableau I ci-dessous.

TABLEAU I

| | Composition 1 | Composition 2 | Composition 3 | Composition 4 | Composition 5 | Composition 6 |
|---|---|---|---|---|---|---|
| | (Parties en poids) | | | | | |
| Thiométhacrylate | | | | | | |
| PLEXO 6856 | 58,2 | 58,1 | 56,9 | 52,2 | 58,2 | 57 |
| Monomère haut nombre d'Abbe | | | | | | |
| DCPA<br>DVB | 22,2<br>3,6 | 22,2<br>3,6 | 20,9<br>3,9 | 22,3<br>4,7 | 22,2<br>3,6 | 21,8<br>3,6 |
| Monomère polythiol | | | | | | |
| PETG | 15,3 | 10,4 | 17,9 | 12,4 | 8,3 | 6,9 |
| Autre monomère | | | | | | |
| DMDS | - | 5 | - | 7,7 | 7,0 | 10,0 |
| Agent anti-jaunissement | | | | | | |
| MBOL | 0,3 | 0,3 | - | 0,3 | 0,3 | 0,3 |
| Absorbeur UV | | | | | | |
| UV 5411 | 0,1 | 0,1 | 0,1 | 0,1 | 0,1 | 0,1 |
| Photoamorceur | | | | | | |
| CGI 819 | 0,3 | 0,3 | 0,3 | 0,3 | 0,3 | 0,3 |

PLEXO 6856 : mélange monomères de formules IV, V et VI, dans les proportions, respectivement de 36 %, 46 % et 4,5 % en poids par rapport au poids total des monomères IV + V + VI, commercialisé par la Société RÖHM

DCPA : dicyclopentadiène diméthacrylate

DVB : divinylbenzène haute pureté (DVB 960 de Shin Nakamura)

PETG : pentaérithrytol tétrakis (thioglycolate)

DMDS : bis(2-mercaptoéthyl)sulfure

MBOL : 3-méthyl-2-butène-1-ol

UV 5411 : absorbeur UV de formule 2-(2-hydroxy-5-t-octylphényl)benzotriazole

2) Processus de coulée

Les compositions préparées comme indiqué ci-dessus sont coulées dans des moules constitués de deux parties de moule en verre minéral préalablement nettoyées à la soude, assemblées parallèlement par un ruban adhésif BARNIER de 2 mm. La coulée s'opère de la manière suivante :

- prélèvement de la composition à l'aide d'une seringue stérile (20 ml);
- désassemblage partiel du ruban adhésif pour créer une ouverture;
- insertion de l'embout de la seringue par l'ouverture;
- injection de la composition dans le moule;
- repositionnement du ruban adhésif pour fermeture étanche dumoule.

3) Prépolymérisation photochimique

Les moules remplis sont placés dans un four de polymérisation photochimique constitué de deux lampes U. V. PRIMA" (lampes mercure) positionnées de part et d'autre à égale distance des moules et chaque moule reçoit pendant 30 secondes un éclairement de 12 $mW/cm^2$.

Des mesures infrarouge permettent de suivre la conversion des doubles liaisons (méthacryliques en fonction du temps d'irradiation UV .

4) Polymérisation photochimique

L'assemblage est ensuite introduit dans un four UV (lampe mercure) et soumis à un éclairement croissant jusqu'à une valeur de 200 $mW/cm^2$, pendant une durée de 2 minutes. Les verres sont ensuite démoulés puis contrôlés à la lampe à arc. Un ultime recuit permet de parfaire la polymérisation et de relaxer les contraintes résiduelles du substrat obtenu.

Les caractéristiques des substrats obtenus figurent dans le tableau II.

L'indice de jaune YI a été mesuré selon la norme ASTM D 1925 pour des verres de 2 mm d'épaisseur.

La mesure de la Tg est effectuée par DMA (Analyse Mécanique Dynamique) sur une éprouvette de 5,2 cm x 1 cm x 2 r= (épaisseur) plane.

L'essai est effectué en flexion 3 points.

Tg correspond au maximum du rapport.

$$\frac{E'' \text{ (module de perte)}}{E' \text{ (module de conservation)}}$$

Les indices de réfraction $n_e$ ($\lambda$ = 546 nm) et les nombres d'Abbe $\nu_e$ ont été déterminés à 25°C au moyen d'un réfractomètre BELLINGHAM STANLEY LIMITED ABBE 60/TR en utilisant différentes lampes (sodium, mercure et cadmium) comme sources lumineuses.

Les analyses DMA ont été effectuées avec un appareil Rhéometrics Solid Analyser RSA II sur des éprouvettes 52 x 10 x 2 mm, à fréquence 1 Hz et sur une gamme de température de -50°C à 170°C à 2°C/minute.

Les résultats sont donnés dans le tableau II.

## TABLEAU II

| | Composition 1 | Composition 2 | Composition 3 | Composition 4 | Composition 5 | Composition 6 |
|---|---|---|---|---|---|---|
| $n_e$ | 1,587 | 1,592 | 1,587 | 1,591 | 1,593 | 1,596 |
| $\nu_e$ | 40 | 40 | 40,5 | 41 | 40 | 40 |
| d | 1,27 | 1,27 | 1,28 | 1,27 | 1,27 | 1,27 |
| Yi | 1,2 | 1,2 | 1,9 | 1,5 | 1,7 | 1,6 |
| E' 25°C (MPa) | 3500 | 3260 | 3500 | 3300 | - | 3200 |
| E' 100°C (MPa) | 860 | 450 | 635 | 185 | - | 190 |
| Tg (°C) 104 | 104 | 96 | 102 | 92 | - | 88 |

Un test de résistance à une contrainte mécanique de type quasi statique est pratiqué conformément à la norme NF EN ISO 14889 sur 12 verres correspondant à la composition n°6 du tableau I ci-dessus et présentant une épaisseur moyenne au centre de 1,22 mm.

Tous les verres testés passent avec succès le test correspondant (aucun verre étoilé, pas de perte de matière).

Un test de résistance aux chocs (conformément à la norme américaine FDA de la chute de bille (16 g, 1,27 m) est pratiqué sur un échantillon de 12 verres correspondant à la composition n°6 du tableau I ci-dessus et présentant une épaisseur au centre de 1,23 ± 0,03 mm.

Les 12 verres testés passent avec succès le test FDA (absence de cassure ou d'étoilement).

Exemples 7 à 12

On a formulé six compositions de monomères polymérisables selon l'invention à partir d'un mélange de monomères de formule (IV) et de monomères de formule (VII) dans des proportions respectives 35 % et 65 % en poids (TMA de la société PPG) :

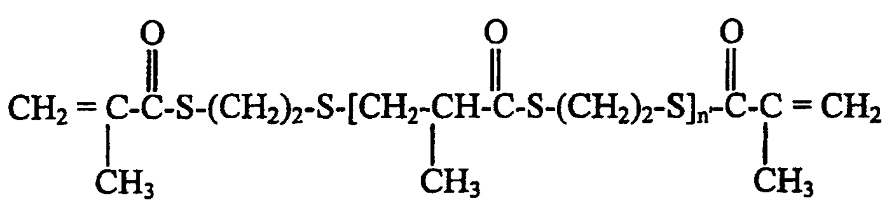

(VII)

où n' est un entier de 1 à 10.

Les compositions sont indiquées dans le tableau III

TABLEAU III

| | Composition 7 | Composition 8 | Composition 8 | Composition 10 | Composition 11 | Composition 12 |
|---|---|---|---|---|---|---|
| Thiométhacrylate | | | | | | |
| TMA (PPG) | 59,5 | 62,5 | 63,6 | 58,1 | 61 | 63 |
| Monomère haut nombre d'Abbe | | | | | | |
| DCPA | 21,8 | 21,9 | 21,9 | 22,2 | 22 | 20 |
| DVB | 3 | 3 | 4 | 5,4 | 3 | 3 |
| Monomère polythiol | | | | | | |
| PETG | 15 | 12 | 9,9 | 9,2 | 14 | - |
| DMDS | - | - | - | 4,5 | - | 4 |
| Autre monomère | | | | | | |
| OBADMA | - | - | - | - | - | 10 |

Toutes ces formulations contiennent :

- 0,3 % de MBOL (agent anti-jaunissement)
- 0,3 % de CGI 819 (photoamorceur)
- 0,1 % d'UV 5411 (absorbeur UV).

Les procédés de coulée, prépolymérisation thermique et recuit ainsi que les caractérisations effectuées sont identiques à ceux décrits pour les exemples 1 à 6.

Les résultats sont indiqués dans le tableau IV

TABLEAU IV

| | Composition 7 | Composition 8 | Composition 9 | Composition 10 | Composition 11 | Composition 12 |
|---|---|---|---|---|---|---|
| $n_e$ | 1,593 | 1,594 | 1,595 | 1,596 | 1,594 | 1,595 |
| $\nu_e$ | 40-41 | 39-40 | 39 | 40 | 40 | 39 |
| d | 1,29 | 1,29 | 1,28 | 1,27 | 1,29 | 1,26 |
| Yi (20/10) | 1,55 | 1,6 | 2,1 | 1,6 | 1,5 | 1,7 |
| E' 25°C (MPa) | 2960 | 3000 | 3000 | 2700 | 2200 | - |
| E' 100°C (MPa) | 110 | 170 | 360 | 110 | 120 | - |
| Tg (°C) 104 | 79 | 83 | 100 | 82 | 84 | - |
| Choc (FDA) | | | | ec = 1,26mm 20 verres/20 OK | ec = 1,25mm 31 verres/31 OK | |

ec : épaisseur centre

## Revendications

1. Composition de monomères polymérisables, **caractérisée en ce qu'**elle comprend :

   (a) au moins 40 parties en poids, de préférence au moins 50 parties en poids d'au moins un monomère thio (méth)acrylate;
   (b) au moins un monomère à haut nombre d'Abbe;
   (c) au plus 20 parties en poids, de préférence au plus 15 parties en poids, et mieux au plus 10 parties en poids, d'un monomère polyvinylique aromatique; et
   (d) au moins un polythiol;

   pour 100 parties en poids de (a), (b), (c) et (d).

2. Composition selon la revendication 1, **caractérisée en ce qu'**elle comprend 10 à 40 parties en poids du ou des monomères à haut nombre d'Abbe (b).

3. Composition selon la revendication 1 ou 2, **caractérisée en ce qu'**elle comprend 5 à 20 parties en poids du ou des polythiols (d).

4. Composition selon l'une quelconque des revendications 1 à 3, **caractérisée en ce qu'**elle comprend 0,5 à 10 parties en poids, préférentiellement 1 à 5 parties en poids de monomère vinylique aromatique pour 100 parties en poids de (a), (b), (c) et (d).

5. Composition selon l'une quelconque des revendications 1 à 4, **caractérisée en ce qu'**elle comprend en outre,

pour 100 parties en poids des monomères de (a), (b), (c) et (d), jusqu'à 30 parties en poids d'au moins un autre monomère copolymérisable différent des monomères de (a), (b), (c) et (d).

**6.** Composition selon la revendication 5, **caractérisée en ce que** le ou les autres monomères sont copolymérisables par voie radiculaire.

**7.** Composition selon l'une quelconque des revendications précédentes, **caractérisée en ce que** le monomère thio (méth)acrylate (a) est choisi parmi les composés de formule

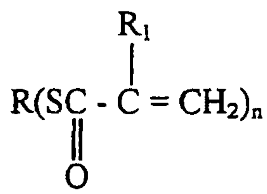

(I)

dans laquelle

R représente un radical hydrocarboné aliphatique, linéaire ou ramifié, monovalent ou polyvalent, ou un groupement aromatique monovalent ou polyvalent directement lié à l'atome de soufre du ou des groupements thio (méth)acrylates par un noyau aromatique ou par l'intermédiaire d'une chaîne alkyle linéaire, le radical R pouvant comporter dans sa chaîne un ou plusieurs groupes choisis parmi -O- , -S- ,

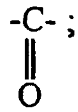

$R_1$ représente l'hydrogène ou $-CH_3$; et
n est un entier de 1 à 6, de préférence de 1 à 3.

**8.** Composition selon l'une quelconque des revendications précédentes, **caractérisée en ce que** le monomère thio (méth)acrylate (a) est non aromatique.

**9.** Composition selon l'une quelconque des revendications précédentes, **caractérisée en ce que** le ou les monomères thio(méth)acrylates de (a) sont choisis parmi les monomères de formule :

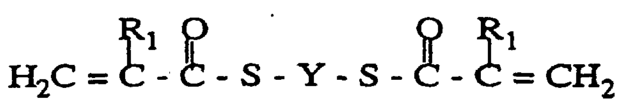

(II)

dans laquelle Y représente un groupe alkylène linéaire ou ramifié en $C_2$-$C_{12}$, un groupe cycloalkylène en $C_3$-$C_{12}$, un groupe arylène en $C_6$-$C_{14}$ ou un groupe alkanylène en $C_7$-$C_{26}$, les chaînes carbonées de Y pouvant être interrompues par un ou plusieurs atomes d'oxygène et/ou de soufre, et $R_1$ est l'hydrogène ou un groupe méthyle;
les monomères de formule:

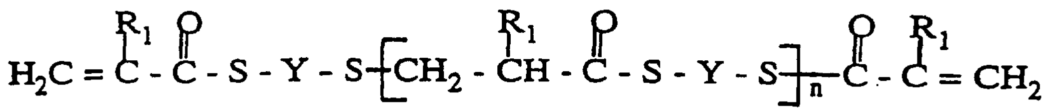 (III)

dans laquelle $R_1$ et Y sont définis comme précédemment, et n est un entier de 1 à 10, de préférence de 1 à 6, et leurs mélanges.

**10.** Composition selon la revendication 9, **caractérisée en ce que** le monomère thio(méth)acrylate est un mélange de :

- 35 % en poids de monomère de formule :

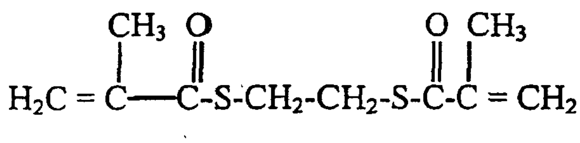 (IV) ,

et

- 65 % en poids de monomère de formule :

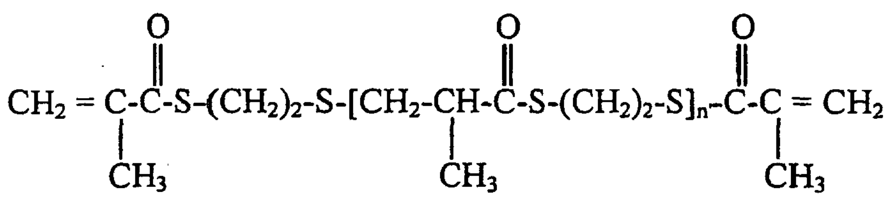 (VII)

où n' est un entier de 1 à 10.

**11.** Composition selon la revendication 9, **caractérisée en ce que** les monomères thio(méth)acrylates de (a) comprennent un mélange en pourcent en poids par rapport au poids total du mélange, de

(1) 10 à 50 % d'un monomère de formule:

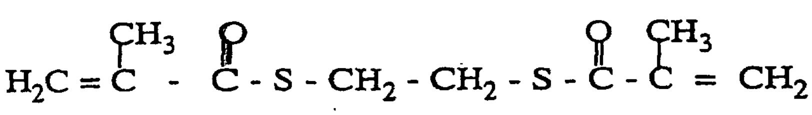 ;

(2) 30 à 60 % d'un monomère de formule :

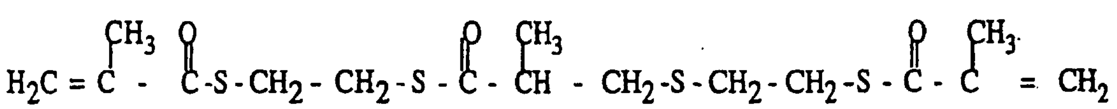 ;

et

(3) 0 à 20 % d'un monomère de formule

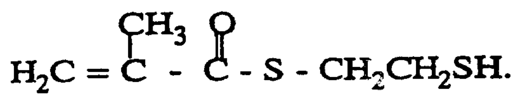

**12.** Composition selon l'une quelconque des revendications précédentes, **caractérisée en ce que** le ou les monomères à haut nombre d'Abbe sont choisis parmi les monomères de formules :

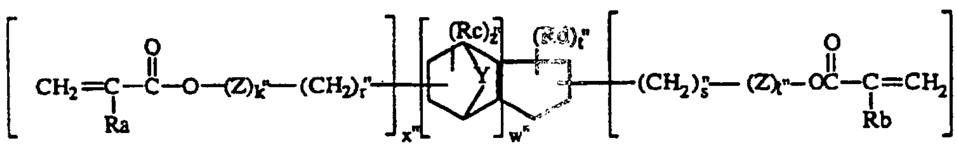 (A1)

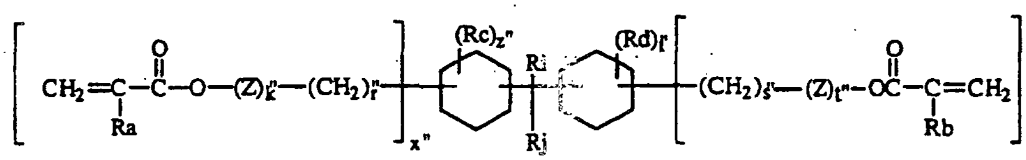 (B1)

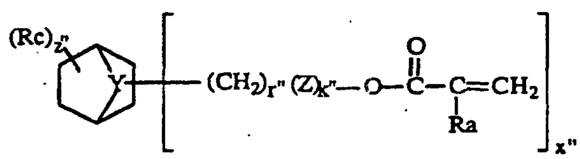 (C1)

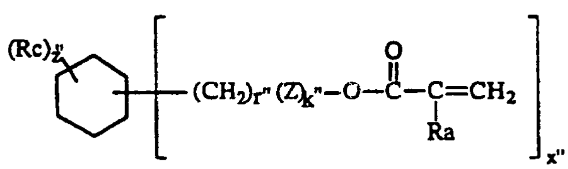 (D1)

Formules dans lesquelles :

Y est un radical divalent choisi parmi -O- , $-CH_2-$ , $-C(CH_3)_2-$ , $-C(H)(CH_3)-$,
Z est un radical divalent choisi parmi $-(CH_2)_P$ -O- , p étant un entier de 1 à 4, et

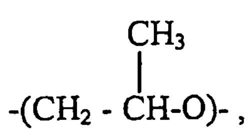

$R_a$, $R_b$ représentent H ou $CH_3$ ,
$R_c$, $R_d$ représentent, indépendamment l'un de l'autre, un radical alkyle linéaire ou ramifié de 1 à 6 atomes de

carbone,
$R_i$, $R_j$ représentent, indépendamment l'un de l'autre, un radical alkyle linéaire ou ramifié de 1 à 10 atomes de carbone,
w" est un entier de 1 à 3,
x" est un entier de 0 à 3,
y" est un entier de 0 à 3,
à la condition que x" + y" ≥ 1,
k" est un entier de 0 à 6,
l" est un entier de 0 à 6,
r" est un entier de 0 à 6
s" est un entier de 0 à 6,
z" est un entier de 0 à 3, et
t" est un entier de 0 à 3.

**13.** Composition selon la revendication 12, **caractérisée en ce que** les monomères à haut nombre d'Abbe sont choisis parmi les monomères de formule :

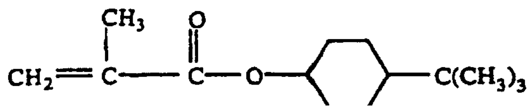

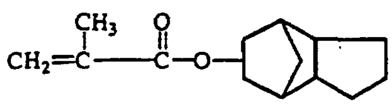

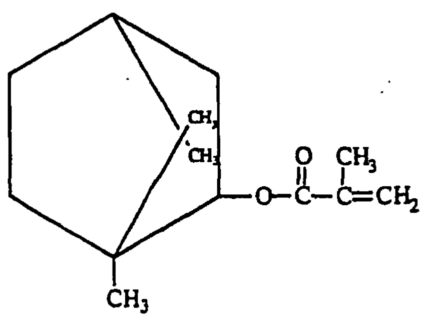

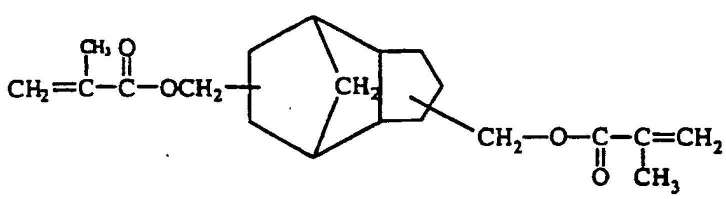

**14.** Composition selon l'une quelconque des revendications précédentes, **caractérisée en ce que** le ou les monomères polyvinyliques aromatiques sont choisis parmi les monomères de formule :

$$[(CH_2=CH)-(A)_{a'}-]_{b'}-B$$

dans laquelle B est choisi parmi :

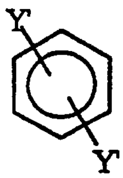,

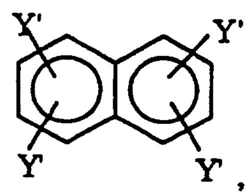,

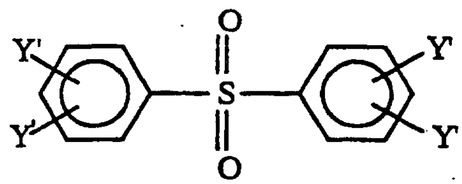,

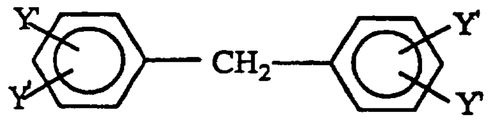,

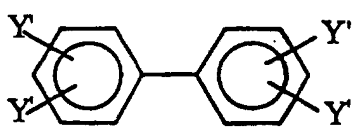,

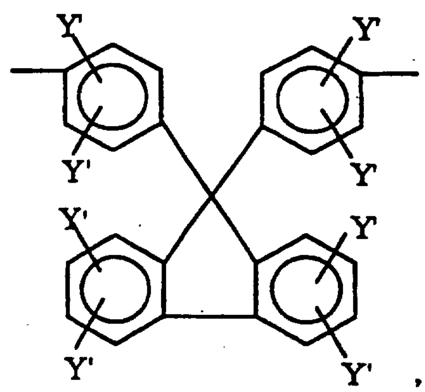,

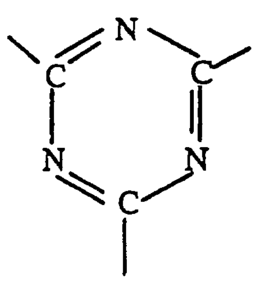,

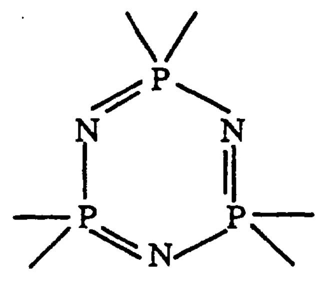,

A est une chaîne divalente choisie parmi :

$$-CH_2-,\ -(CH_2)_{c'}-O-,\ -CH_2-\overset{CH_3}{\overset{|}{C}}-O-\ \text{ou}\ -(CH_2-CH_2-S)-,$$

Y' est un atome d'hydrogène ou un halogène,
a'= 0, 1 ou 2,
b' est un entier de 2 à 6, et
c' est un entier de 1 à 4.

**15.** Composition selon la revendication 14, **caractérisée en ce que** le ou les monomères polyvinyliques aromatiques sont choisis parmi le divinylbenzène, le divinylnaphtalène, et leurs dérivés.

**16.** Composition selon l'une quelconque des revendications précédentes, **caractérisée en ce que** le ou les monomères polythiols (c) sont choisis parmi les monomères de formule

$$R' (SH)_{n'}$$

dans laquelle R' est un radical aliphatique, aromatique ou hétérocyclique et n'est un entier de 2 ou plus, de préférence de 2 à 5.

**17.** Composition selon la revendication 16, **caractérisée en ce que** le monomère polythiol (d) est choisi parmi l'éthylèneglycol bis(thioglycolate), le triméthylolpropane tris(3-mercaptopropionate), le pentaérythritol tétrakis thiopropionate (PETP), le 4-mercaptométhyl-3,6-dithia-1,8-octanedithiol (MDO), le bis(2-mercaptoéthyl)sulfure (DMDS) et le pentaérythritol tétrakis thioglycolate (PETG).

**18.** Composition selon l'une quelconque des revendications précédentes, **caractérisée en ce qu'**elle comprend en outre un photoamorceur et/ou un amorceur thermique.

**19.** Composition selon l'une quelconque des revendications précédentes, **caractérisée en ce qu'**elle est photopolymérisable.

**20.** Substrat organique polymérisé transparent résultant de la polymérisation d'une composition, selon l'une quelconque des revendications précédentes.

**21.** Substrat selon la revendication 20, **caractérisé en ce qu'**il constitue une lentille optique ou ophtalmique.

## Patentansprüche

**1.** Polymerisierbare Monomerzusammensetzung, **dadurch gekennzeichnet, dass** sie umfasst:

a) mindestens 40 Gewichtsteile, vorzugsweise mindestens 50 Gewichtsteile mindestens eines Thio(meth) acrylatmonomers;
b) mindestens ein Monomer mit einer hohen Abbéschen Zahl;
c) höchstens 20 Gewichtsteile, vorzugsweise höchstens 15 Gewichtsteile und am meisten bevorzugt höchstens 10 Gewichtsteile eines aromatischen Polyvinylmonomers; und
d) mindestens ein Polythiol

auf 100 Gewichtsteile a), b), c) und d).

**2.** Zusammensetzung nach Anspruch 1, **dadurch gekennzeichnet, dass** sie 10 bis 40 Gewichtsteile des oder der Monomere mit hoher Abbéscher Zahl b) umfasst.

**3.** Zusammensetzung Anspruch 1 oder 2, **dadurch gekennzeichnet, dass** sie 5 bis 20 Gewichtsteile des oder der Polythiole d) umfasst.

**4.** Zusammensetzung nach einem der Ansprüche 1 bis 3, **dadurch gekennzeichnet, dass** sie 0,5 bis 10 Gewichtsteile, vorzugsweise 1 bis 5 Gewichtsteile vinylaromatisches Monomer auf 100 Gewichtsteile a), b), c) und d) umfasst.

**5.** Zusammensetzung nach einem der Ansprüche 1 bis 4, **dadurch gekennzeichnet, dass** sie darüber hinaus auf 100 Gewichtsteile a), b), c) und d) bis zu 30 Gewichtsteile mindestens eines anderen copolymerisierbaren Monomers umfasst, das sich von den Monomeren a), b), c) und d) unterscheidet.

**6.** Zusammensetzung nach Anspruch 5, **dadurch gekennzeichnet, dass** das oder die anderen Monomere auf radikalischem Weg copolymerisierbar sind.

7. Zusammensetzung nach einem der vorhergehenden Ansprüche, **dadurch gekennzeichnet, dass** das Thio(meth) acrylatmonomer a) ausgewählt wird aus den Verbindungen mit der Formel

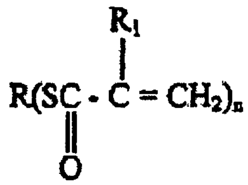

(I)

in welcher
R einen aliphatischen, linearen oder verzweigten, einwertigen oder mehrwertigen Kohlenwasserstoffrest, oder eine einwertige oder mehrwertige aromatische Gruppe darstellt, die durch einen aromatischen Kern oder mittels einer linearen Alkylkette direkt an das Schwefelatom des oder der Thio(meth)acrylatgruppen gebunden ist, wobei der Rest R in seiner Kette eine oder mehrere Gruppen enthalten kann, ausgewählt aus -O-, -S-,

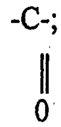

$R_1$ Wasserstoff oder $-CH_3$ darstellt; und
n eine ganze Zahl zwischen 1 und 6, vorzugsweise zwischen 1 und 3 ist.

8. Zusammensetzung nach einem der vorhergehenden Ansprüche, **dadurch gekennzeichnet, dass** das Thio(meth) acrylatmonomer a) nicht aromatisch ist.

9. Zusammensetzung nach einem der vorhergehenden Ansprüche, **dadurch gekennzeichnet, dass** das oder die Thio(meth)acrylatmonomere a) ausgewählt werden aus den Monomeren mit der Formel

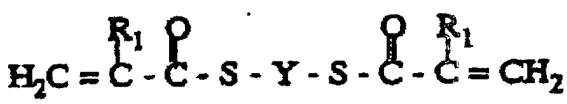

(II)

in welcher Y eine lineare oder verzweigte $C_2$-$C_{12}$-Alkylengruppe, eine $C_3$-$C_{12}$-Cycloalkylengruppe, eine $C_6$-$C_{14}$-Arylengruppe oder eine $C_7$-$C_{26}$-Alkanylengruppe darstellt, wobei die Kohlenstoffketten von Y durch ein oder mehrere Sauerstoff- und/oder Schwefelatome unterbrochen sein kann, und $R_1$ ein Wasserstoffatom oder eine Methylgruppe darstellt;
aus den Monomeren mit der Formel

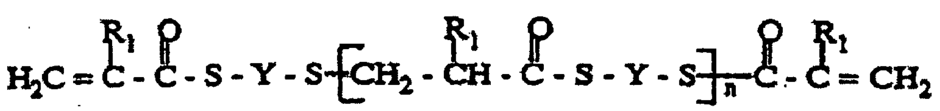

(III)

in welcher $R_1$ und Y wie oben definiert sind und n eine ganze Zahl zwischen 1 und 10, vorzugsweise zwischen 1 und 6 ist, sowie aus ihren Mischungen.

10. Zusammensetzung nach Anspruch 9, **dadurch gekennzeichnet, dass** das Thio(meth)acrylatmonomer eine Mischung ist aus:

- 35 Gew.-% Monomer mit der Formel

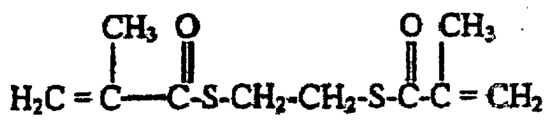 (IV),

und

- 65 Gew.-% Monomer mit der Formel

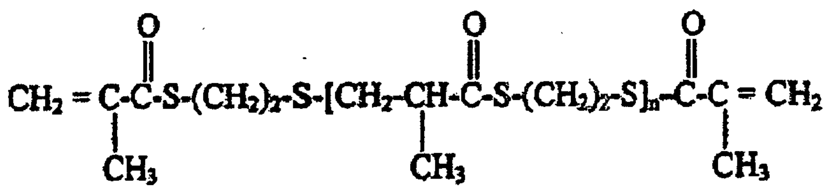 (VII)

in welchen n eine ganze Zahl zwischen 1 und 10 ist.

**11.** Zusammensetzung nach Anspruch 9, **dadurch gekennzeichnet, dass** die Thio(meth)acrylatmonomere a) eine Mischung in Gewichtsprozent bezogen auf das Gesamtgewicht der Mischung umfassen, von

1) 10 bis 50 % Monomer mit der Formel

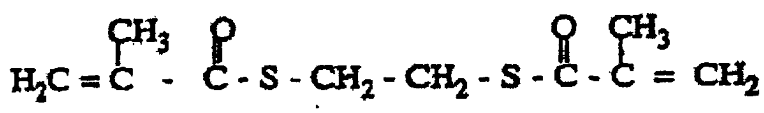 ;

2) 30 bis 60 % Monomer mit der Formel

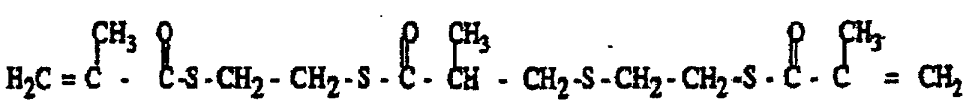 ;

und

3) 0 bis 20 % Monomer mit der Formel

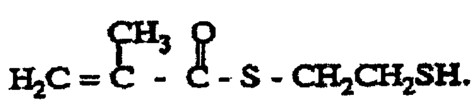

**12.** Zusammensetzung nach einem der vorhergehenden Ansprüche, **dadurch gekennzeichnet, dass** das oder die Monomere mit hoher Abbéscher Zahl ausgewählt werden aus den Monomeren mit den Formeln:

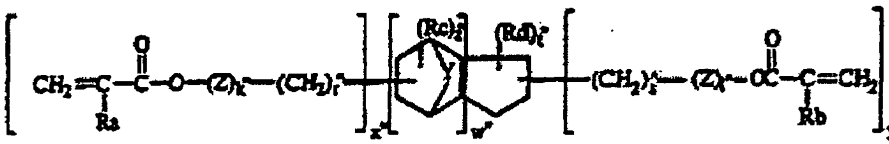
(AI)

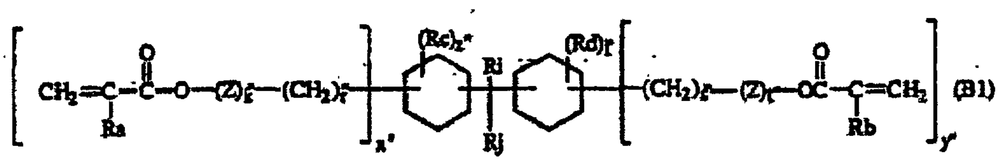
(B1)

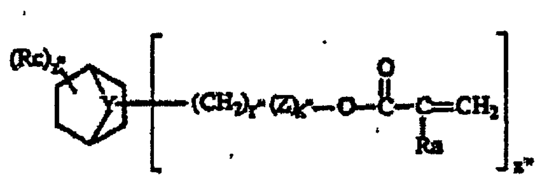
(C1)

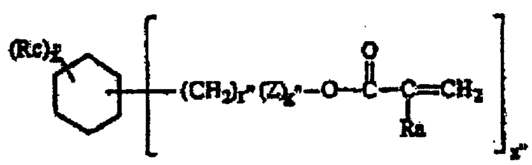
(D1)

in welchen:

Y ein zweiwertiger Rest ist, ausgewählt aus -O-, $-CH_2-$, $-C(CH_3)_2-$, $-C(H)(CH_3)-$,

Z ein zweiwertiger Rest ist, ausgewählt aus $-(CH_2)_p-O-$, wobei p eine ganze Zahl zwischen 1 und 4 ist, und

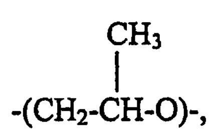

$R_a$, $R_b$ H oder $CH_3$ darstellen,

$R_c$, $R_d$ unabhängig voneinander einen linearen oder verzweigten Alkylrest mit 1 bis 6 Kohlenstoffatomen darstellen,

$R_i$, $R_j$ unabhängig voneinander einen linearen oder verzweigten Alkylrest mit 1 bis 10 Kohlenstoffatomen darstellen,

w" eine ganze Zahl zwischen 1 und 3 ist,

x" eine ganze Zahl zwischen 0 und 3 ist,

y" eine ganze Zahl zwischen 0 und 3 ist,

unter der Bedingung, dass x" + y" ≥ 1 ist,

k" eine ganze Zahl zwischen 0 und 6 ist,

l" eine ganze Zahl zwischen 0 und 6 ist,

r" eine ganze Zahl zwischen 0 und 6 ist,

s" eine ganze Zahl zwischen 0 und 6 ist,

z" eine ganze Zahl zwischen 0 und 3 ist,

t" eine ganze Zahl zwischen 0 und 3 ist.

**13.** Zusammensetzung nach Anspruch 12, **dadurch gekennzeichnet, dass** die Monomere mit hoher Abbéscher Zahl ausgewählt werden aus den Monomeren mit den Formeln:

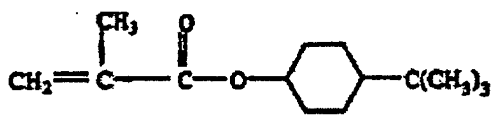

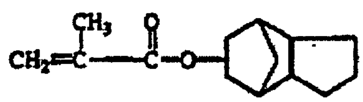

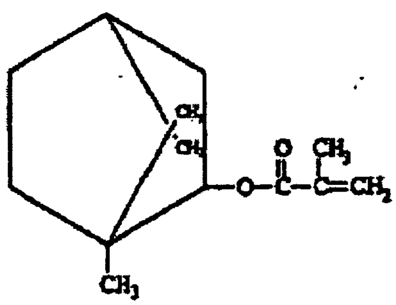

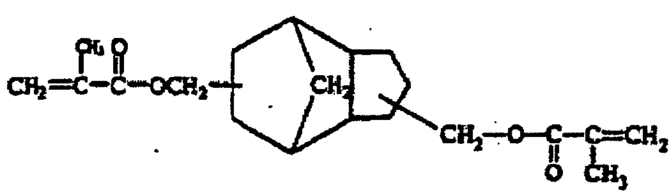

**14.** Zusammensetzung nach einem der vorhergehenden Ansprüche, **dadurch gekennzeichnet, dass** das oder die aromatischen Polyvinylmonomere ausgewählt werden aus den Monomeren mit der Formel:

$$[(CH_2{=}CH){-}(A)_{a'}{-}]_{b'}{-}B$$

in welcher B ausgewählt wird aus:

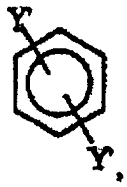,
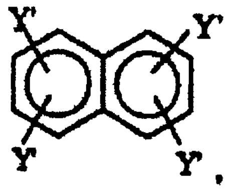,
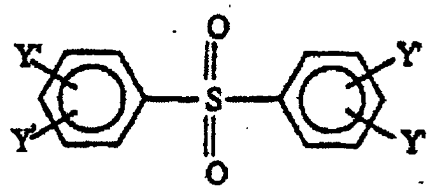,

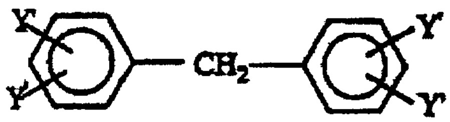,

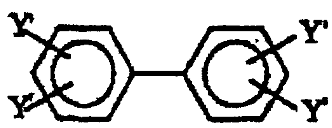,
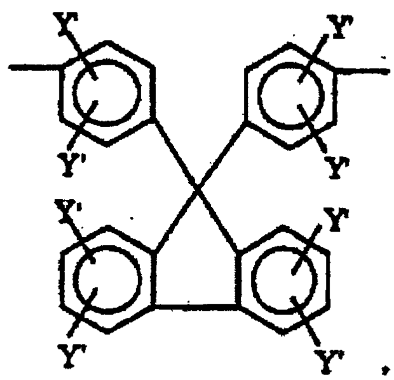,

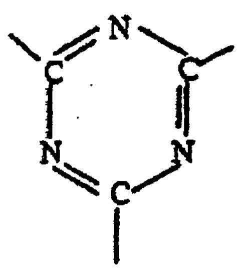,
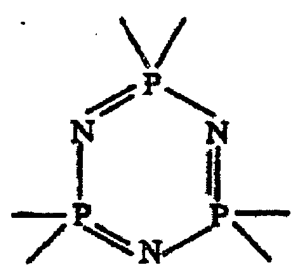,

A eine zweiwertige Kette ist, ausgewählt aus:

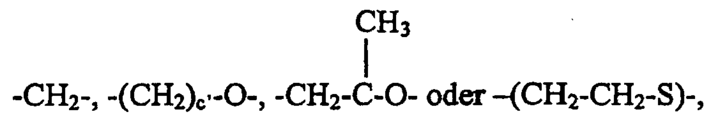

Y' ein Wasserstoff- oder Halogenatom ist,
a' = 0, 1 oder 2;
b' eine ganze Zahl zwischen 2 und 6 ist, und
c' eine ganze Zahl zwischen 1 und 4 ist.

**15.** Zusammensetzung nach Anspruch 14, **dadurch gekennzeichnet, dass** das oder die aromatischen Polyvinylmonomere ausgewählt werden aus Divinylbenzol, Divinylnaphtalin und ihren Derivaten.

**16.** Zusammensetzung nach einem der vorhergehenden Ansprüche, **dadurch gekennzeichnet, dass** das oder die Polythiolmonomere d) ausgewählt werden aus den Monomeren mit der Formel

$$R'(SH)_{n'}$$

in welcher R' ein aliphatischer, aromatischer oder heterocyclischer Rest ist und n' eine ganze Zahl von 2 oder mehr, vorzugsweise von 2 bis 5 ist.

**17.** Zusammensetzung nach Anspruch 16, **dadurch gekennzeichnet, dass** das Polythiolmonomer d) ausgewählt wird aus Ethylenglykol-bis-thioglykolat, Trimethylolpropan-tris-(3-mercaptopropionat), Pentaerythrit-tetrakis-(thiopropionat) (PETP), 4-Mercaptomethyl-3,6-dithia-1,8-octandithiol (MDO), Bis-(2-mercaptoethyl)sulfid (DMDS) und Pentaerythrittetrakis-(thioglykolat) (PETG).

**18.** Zusammensetzung nach einem der vorhergehenden Ansprüche, **dadurch gekennzeichnet, dass** sie darüber hinaus einen Photoinitiator und/oder einen thermischen Initiator enthält.

**19.** Zusammensetzung nach einem der vorhergehenden Ansprüche, **dadurch gekennzeichnet, dass** sie photopolymerisierbar ist.

**20.** Transparentes, polymerisiertes organisches Substrat, entstanden aus der Polymerisation einer Zusammensetzung nach einem der vorhergehenden Ansprüche.

**21.** Substrat nach Anspruch 20, **dadurch gekennzeichnet, dass** es eine optische oder ophthalmische Linse bildet.

## Claims

**1.** A polymerizable monomer composition, **characterized in that** it comprises :

(a) at least 40 parts by weight, preferably at least 50 parts by weight, of at least one thio(meth)acrylate monomer,
(b) at least one high Abbe number monomer,
(c) at the most 20 parts by weight, preferably at the most 15 parts by weight, more preferably at the most 10 parts by weight, of an aromatic polyvinyl monomer, and
(d) at least one polythiol,

for 100 parts by weight of (a), (b), (c) and (d).

**2.** A composition according to claim 1, **characterized in that** it comprises 10 to 40 parts by weight of the high Abbe number monomer(s) (b).

**3.** A composition according to claim 1 or 2, **characterized in that** it comprises 5 to 20 parts by weight of the polythiol (s) (d).

**4.** A composition according to any one of claims 1 to 3, **characterized in that** it comprises 0.5 to 10 parts by weight, preferably 1 to 5 parts by weight of the aromatic vinyl monomer for 100 parts by weight of (a), (b), (c) and (d).

**5.** A composition according to any one of claims 1 to 4, **characterized in that** it comprises moreover, for 100 parts by weight of monomers (a), (b), (c) and (d), up to 30 parts by weight of at least another copolymerizable monomer different from the monomers (a), (b), (c) and (d).

**6.** A composition according to claim 5, **characterized in that** the other monomer(s) are radical copolymerizable monomer(s).

**7.** A composition according to any one of the preceding claims, **characterized in that** the thio(meth)acrylate monomer (a) is selected from the compounds of the formula:

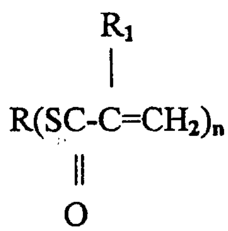

(I)

wherein

R is a linear or branched, monovalent or polyvalent aliphatic hydrocarbon radical, or a monovalent or polyvalent aromatic group, directly linked to the sulfur atom of the thio(meth)acrylate group(s) with an aromatic ring or by means of a linear alkyl chain, the R radical comprising optionally in its chain one or more groups selected amongst -O-, -S-,

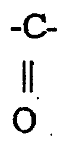

$R_1$ is hydrogen or $-CH_3$, and
n is an integer from 1 to 6, preferably from 1 to 3.

**8.** A composition according to any one of the preceding claims, **characterized in that** the thio(meth)acrylate monomer (a) is non aromatic.

**9.** A composition according to any one of the preceding claims, **characterized in that** the thio(meth)acrylate monomer (s) (a) are selected amongst the monomers of the formula :

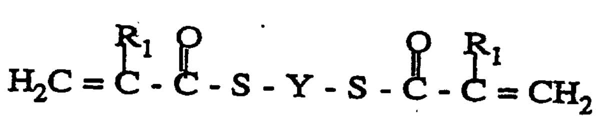

(II)

wherein Y is a linear or branched $C_2$-$C_{12}$ alkylene group, a $C_3$-$C_{12}$ cycloalkylene group, a $C_6$-$C_{14}$ arylene group or a $C_7$-$C_{26}$ alkarylene group, the carbon chains of Y can be interrupted by one or more oxygen and/or sulfur atoms and $R_1$ is hydrogen or a methyl group,

the monomers of the formula :

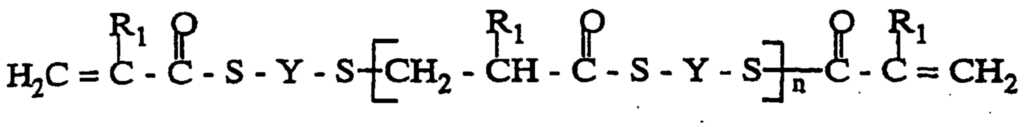 (III)

wherein $R_1$ and Y are defined as above, and n is an integer from 1 to 10, preferably 1 to 6, and the mixtures thereof.

**10.** A composition according to claim 9, **characterized in that** the thio(meth)acrylate monomer is a mixture of :

- 35 % by weight of a monomer of formula

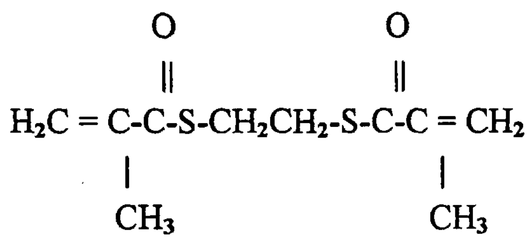 (IV),

and

- 65 % by weight of a monomer of formula

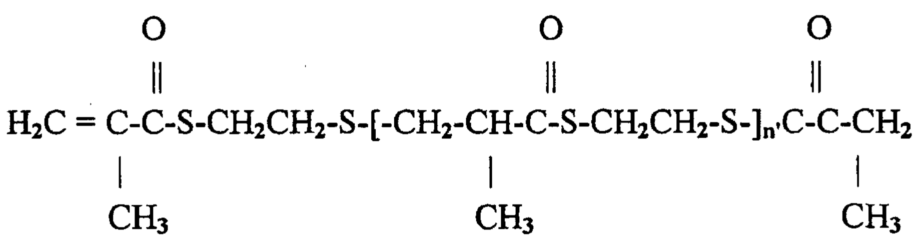 (VII)

where n' is an integer from 1 to 10.

**11.** A composition according to claim 9, **characterized in that** the thio(meth)acrylate monomers (a) comprise a mixture in percent by weight based on the total weight of the mixture, of:

(1) 10 % to 50 % of a monomer of the formula :

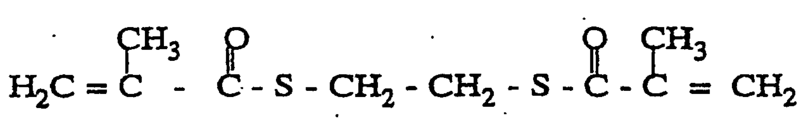 ;

(2) 30 % to 60 % of a monomer of the formula :

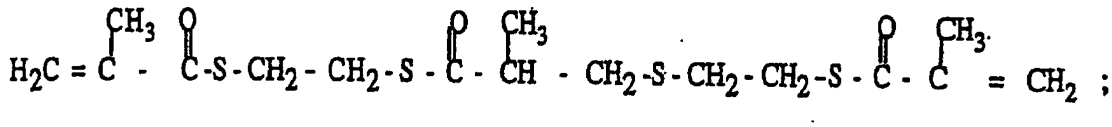

(3) 0 to 20 % of a monomer of the formula :

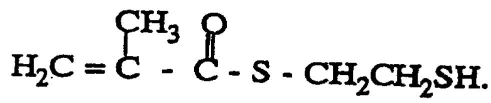

**12.** A composition according to any one of the preceding claims, **characterized in that** the high Abbe number monomer (s) are selected amongst the monomers of the formulae :

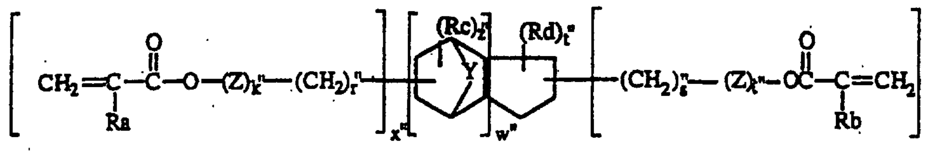 (A1)

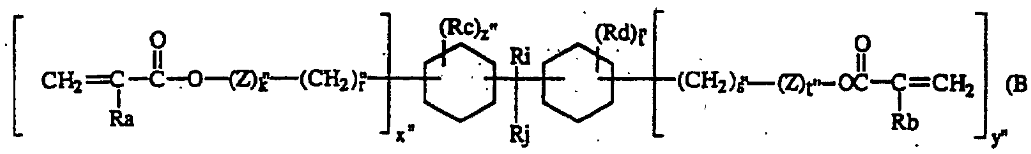 (B1)

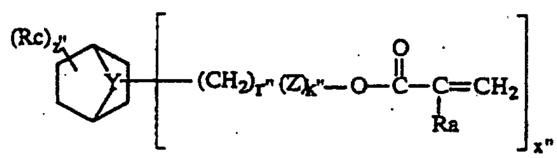 (C1)

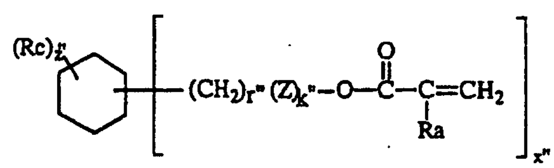 (D1)

wherein Y is a divalent radical selected amongst -O-, $-CH_2-$, $-C(CH_3)_2-$, $-C(H)(CH_3)-$,

Z is a divalent radical selected amongst $-(CH_2)_p$ -O-, p being an integer from 1 to 4, and

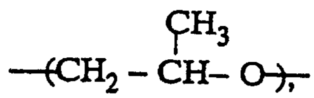

$R_a$, $R_b$ are H or $CH_3$,
$R_c$, $R_d$ are, independently from one another, a linear or branched alkyl radical with 1 to 6 carbon atoms,
$R_i$, $R_j$ are, independently from one another, a linear or branched alkyl radical with 1 to 10 carbon atoms,
w" is an integer from 1 to 3,
x" is an integer from 0 to 3,
y" is an integer from 0 to 3,
providing x" + y" ≥ 1,
k" is an integer from 0 to 6,
l" is an integer from 0 to 6,
r" is an integer from 0 to 6,
s" is an integer from 0 to 6,
z" is an integer from 0 to 3, and
t" is an integer from 0 to 3.

**13.** A composition according to claim 12, **characterized in that** the high Abbe number monomers are selected amongst monomers of the formulae :

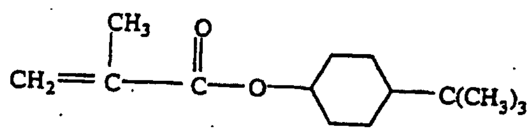

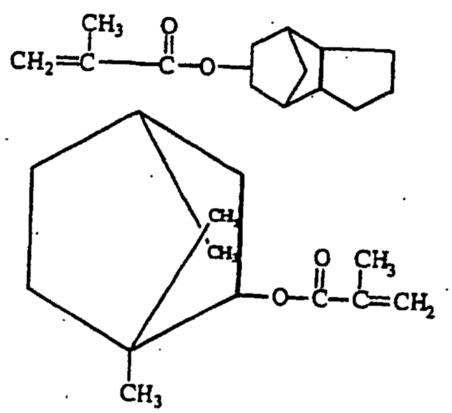

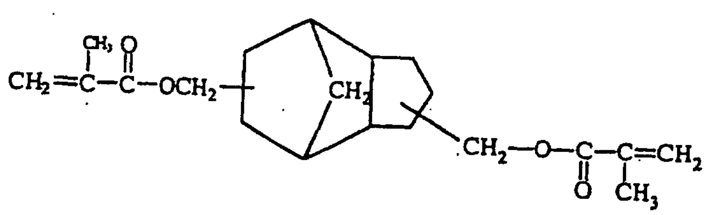

**14.** A composition according to any one of the preceding claims, **characterized in that** the aromatic polyvinyl monomer (s) are selected amongst the monomers of the formula :

$$[(CH_2=CH)(A)_{a'}]_{b'} B$$

where B is selected amongst :

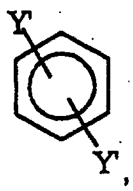,
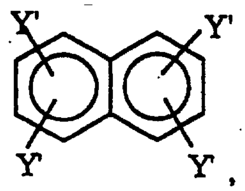,
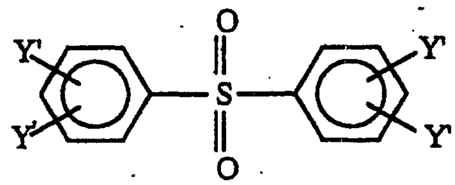,

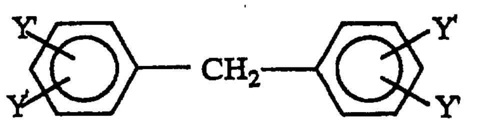,

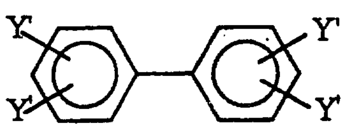,
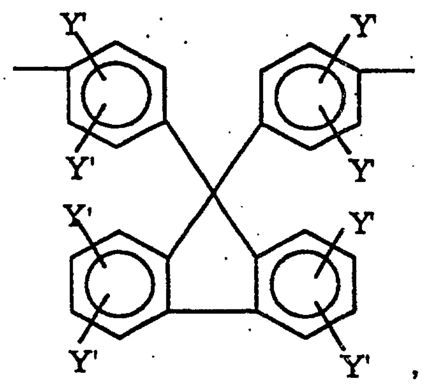,

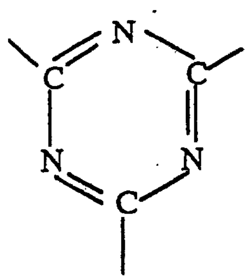,
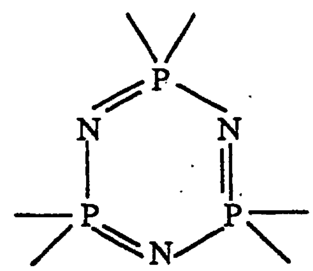,

A is a divalent chain selected amongst :

$$-CH_2- , \quad -(CH_2)_{c'}-O- , \quad -CH_2-C(CH_3)-O-$$

or

$$-(CH_2-CH_2-S)-,$$

Y' is a hydrogen atom or an halogen
a' = 0, 1 or 2,
b' is an integer from 2 to 6, and
c' is an integer from 1 to 4.

**15.** A composition according to claim 14, **characterized in that** the aromatic polyvinyl monomer(s) is/are selected from divinylbenzene, divinylnaphthalene or their derivatives.

**16.** A composition according to any one of the preceding claims, **characterized in that** the polythiol monomer(s) (c) are selected from the monomers of the formula $R'(SH)_{n'}$, wherein R' is an aliphatic, aromatic or heterocyclic radical and n' is an integer of 2 or more, preferably 2 to 5.

**17.** A composition according to claim 16, **characterized in that** the polythiol monomer (d) is selected amongst ethyleneglycol bis(thioglycolate), trimethylolpropane tris(3-mercaptopropionate), pentaerythritol tetrakis thiopropionate (PETP), 4-mercaptomethyl-3,6-dithia-1,8-octanedithiol (MDO), bis(2-mercaptoethyl)sulfide (DMDS) and pentaerythritol tetrakis thioglycolate (PETG).

**18.** A composition according to any one of the preceding claims, **characterized in that** it comprises moreover a photoinitiator and/or a thermal initiator.

**19.** A composition according to any one of the preceding claims, **characterized in that** it is photopolymerizable.

**20.** A transparent polymerized organic substrate resulting from the polymerization of a composition according to any one of the preceding claims.

**21.** A substrate according to claim 20, **characterized in that** it forms an optical or ophthalmic lens.